(19) Europäisches Patentamt
European Patent Office
Office européen des brevets

(11) **EP 4 387 867 B1**

(12) **EUROPÄISCHE PATENTSCHRIFT**

(45) Veröffentlichungstag und Bekanntmachung des Hinweises auf die Patenterteilung:
**12.11.2025   Patentblatt 2025/46**

(21) Anmeldenummer: **22768719.1**

(22) Anmeldetag: **22.08.2022**

(51) Internationale Patentklassifikation (IPC):
**B60N 2/02** *(2006.01)*       **B60R 16/037** *(2006.01)*

(52) Gemeinsame Patentklassifikation (CPC):
**B60N 2/02246; B60N 2/002; B60N 2/0228; B60N 2/0239; B60N 2/0268; B60N 2/0278; B60N 2/04; B60R 16/037**

(86) Internationale Anmeldenummer:
**PCT/EP2022/073359**

(87) Internationale Veröffentlichungsnummer:
**WO 2023/021223 (23.02.2023 Gazette 2023/08)**

(54) **ANTRIEBSVORRICHTUNG ZUM VERSTELLEN EINER INNENRAUMBAUGRUPPE**

DRIVE MECHANISM FOR ADJUSTING AN INTERIOR ASSEMBLY OF A VEHICLE

MÉCANISME D'ENTRAÎNEMENT POUR AJUSTER UN ENSEMBLE INTÉRIEUR D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.08.2021   PCT/EP2021/073174
17.11.2021   DE 102021212914**

(43) Veröffentlichungstag der Anmeldung:
**26.06.2024   Patentblatt 2024/26**

(73) Patentinhaber: **Brose Fahrzeugteile SE & Co. Kommanditgesellschaft, Bamberg
96052 Bamberg (DE)**

(72) Erfinder:
• **POHL, Florian**
**96237 Ebersdorf (DE)**
• **HERRMANN, Christian**
**96269 Großheirath (DE)**

• **HORN, Peter**
**96164 Kemmern (DE)**
• **KELLER, Harald**
**96167 Königsfeld (DE)**
• **KROMER, Alex**
**96135 Stegaurach (DE)**
• **MÜLLER, Alexander**
**96120 Bischberg (DE)**
• **ROSENTHAL, Markus**
**96052 Bamberg (DE)**

(74) Vertreter: **Maikowski & Ninnemann Patentanwälte Partnerschaft mbB
Postfach 15 09 20
10671 Berlin (DE)**

(56) Entgegenhaltungen:
**WO-A1-2021/023760     US-A1- 2017 166 089**

**Beschreibung**

Die Erfindung betrifft eine Antriebsvorrichtung zum Verstellen einer Innenraumbaugruppe eines Fahrzeugs nach dem Oberbegriff des Anspruchs 1 und ein Verfahren zum Steuern einer Antriebsvorrichtung zum Verstellen einer Innenraumbaugruppe eines Fahrzeugs sowie ein Computerprogrammprodukt.

Eine derartige Antriebsvorrichtung umfasst einen elektromotorischen Verstellantrieb zum Erzeugen einer Verstellkraft, eine durch den Verstellantrieb antreibbare, selbsthemmende Verstellkinematik zum Übertragen einer durch den Verstellantrieb erzeugten Verstellkraft auf die Innenraumbaugruppe und eine Steuereinrichtung zum Steuern des Verstellantriebs.

Bei einer Innenraumbaugruppe der hier beschriebenen Art handelt es sich um eine Baugruppe im Innenraum eines Fahrzeugs. Bei einer Innenraumbaugruppe der hier beschriebenen Art kann es sich beispielsweise um einen Fahrzeugsitz, ein Konsolenelement mit einer Aufbewahrungs- oder Ablagefunktion, um einen Monitor, um eine Trennwand oder um eine Ablage wie einen Tisch oder ein Staufach handeln. Die Innenraumbaugruppe ist nicht Bestandteil der Fahrzeugkarosserie und dient insofern nicht zum Abschließen des Fahrzeugs nach außen (wie dies bei einer Fahrzeugtür oder einem Schiebedach der Fall ist). Die Innenraumbaugruppe ist auch nicht Bestandteil eines Antriebs- und Lenkungssystems des Fahrzeugs (wie zum Beispiel eine Lenksäule eines Fahrzeugs). Die Innenraumbaugruppe ist im Innenraum des Fahrzeugs angeordnet und im Innenraum durch einen Nutzer verstellbar, insbesondere um eine Komfortfunktion im Innenraum zur Verfügung zu stellen.

Beispielsweise kann ein Fahrzeugsitz zur Einstellung einer Lehnenneigung, einer Längs- und/oder Querposition oder auch zum Einstellen einer Rotationsstellung im Innenraum verstellbar sein, um einem Fahrzeuginsassen eine bequeme Sitzposition zu ermöglichen. Ein Konsolenelement kann beispielsweise entlang eines Fahrzeugbodens verschiebbar sein, um eine Ablage im Innenraum des Fahrzeugs bereitzustellen oder eine Betätigung einer Funktionsbaugruppe an dem Konsolenelement zu ermöglichen. Ein Monitor kann in seiner Schwenkstellung, seiner Höhenstellung und/oder seiner Neigungsstellung einstellbar sein, um ein komfortables Betrachten des Monitors für einen Fahrzeuginsassen zu ermöglichen.

Insbesondere bei neuen Innenraumkonzepten, zum Beispiel im Zusammenhang mit autonom fahrenden Fahrzeugen, können Innenraumbaugruppen wie Fahrzeugsitze oder Konsolenelemente variabel verstellbar sein, um Fahrzeuginsassen gegebenenfalls ein komfortables Fahren im Fahrzeug zu ermöglichen. Das Verstellen einer Innenraumbaugruppe soll hierbei einfach, komfortabel und intuitiv durch einen Nutzer vorgenommen werden können.

Aus der US 2017/0166089 A1 ist ein Fahrzeugsitz im Innenraum eines Fahrzeugs bekannt, der elektrisch verstellbar ist. Die Verstellung des Fahrzeugsitzes kann unter Verwendung einer Gestensteuerung durch einen Nutzer initiiert werden, beispielsweise indem ein Nutzer eine vorbestimmte Geste im Bereich des Fahrzeugsitzes ausführt und dadurch zum Beispiel ein Verschwenken einer Rückenlehne oder ein Längsverstellen des Fahrzeugsitzes im Fahrzeuginnenraum bewirken kann.

Bei bekannten Verstellkonzepten kann vorgesehen sein, dass Sensoren zum Erfassen zum Beispiel einer Nutzergeste im Innenraum eines Fahrzeugs vorgesehen werden, um eine Verstellbewegung einer Innenraumbaugruppen, zum Beispiel eines Fahrzeugsitzes, anhand einer erfassten Nutzergeste zu ermöglichen. Dies erfordert zum einen eine vergleichsweise aufwändige Sensorik und zudem eine komplexe Steuerung, die sicherstellen muss, dass eine Nutzergeste zuverlässig erkannt wird, um zum einen eine Verstellbewegung für einen Nutzer in komfortabler Weise zu ermöglichen, gleichzeitig aber auch eine nicht gewünschte Verstellung aufgrund einer gegebenenfalls falsch erkannten Geste zu vermeiden.

Die WO 2021/023760 A1 beschreibt eine Antriebsvorrichtung zum Verstellen einer Fahrzeugbaugruppe, die einen elektromotorischen Verstellantrieb zum Verstellen der Fahrzeugbaugruppe und eine Steuereinrichtung zum Steuern des Verstellantriebs umfasst. Die Steuereinrichtung ist ausgebildet, in einem Haltebetrieb den Verstellantrieb zum Halten der Fahrzeugbaugruppe anzusteuern. Dabei ist vorgesehen, dass die Steuereinrichtung ein Regelungsmodul zum Regeln einer Kenngröße des Verstellantriebs und ein Steuermodul aufweist, wobei das Regelungsmodul ausgebildet ist, eine Stellgröße zum Regeln der Kenngröße des Verstellantriebs in dem Haltebetrieb anhand eines vorgegebenen Sollwerts zu bestimmen.

Aufgabe der vorliegenden Erfindung ist es, eine Antriebsvorrichtung zum Verstellen einer Innenraumbaugruppe in einem Fahrzeug, ein Verfahren und ein Computerprogrammprodukt zur Verfügung zu stellen, die einem Nutzer ein einfaches, komfortables, intuitives Verstellen der Innenraumbaugruppe ermöglichen kann.

Diese Aufgabe wird durch einen Gegenstand mit den Merkmalen des Anspruchs 1 gelöst.

Demnach ist die Steuereinrichtung dazu ausgebildet, einen Verstellmodus zum Verstellen der Innenraumbaugruppe in Abhängigkeit von zumindest einem Triggerkriterium zu aktivieren und bei aktiviertem Verstellmodus den Verstellantrieb mit einem Unterstützungsstrom anzusteuern, der so bemessen ist, dass die Innenraumbaugruppe durch eine durch einen Nutzer manuell an der Innenraumbaugruppe erzeugte Nutzerkraft unter Überwindung der Selbsthemmung der Verstellkinematik in Bewegung versetzbar ist.

Bei der Antriebsvorrichtung ist der elektromotorische Verstellantrieb dazu ausgestaltet, eine Verstellkraft zu erzeugen, die über die Verstellkinematik in die Innenraumbaugruppe eingeleitet wird, um die Innenraumbaugruppe elektromotorisch zu verstellen oder ein Verstellen elektromotorisch zumindest zu unterstützen. Die ein Getriebe aufweisende Verstellkinematik ist hierbei selbsthemmend ausgestaltet, sodass bei nicht bestromtem Verstellantrieb die Innenraumbaugruppe allein über die Verstellkinematik in Position gehalten wird, eine abtriebseitig eingeleitete Kraft somit nicht zu einem Verstellen der Innenraumbaugruppe führen kann.

Unter Selbsthemmung wird in der Mechanik ein durch Reibung verursachter Widerstand gegen ein Verrutschen oder Verdrehen zweier aneinander anliegender Körper verstanden. Bei einem Getriebe besteht Selbsthemmung dann, wenn das Getriebe sich über die Antriebswelle, nicht aber über eine Abtriebswelle antreiben lässt. Eine Selbsthemmung bei Getrieben wird üblicherweise durch eine hohe Übersetzung oder durch einen kleinen Wirkungsgrad (üblicherweise <50 %) eingestellt. Bei einem Schneckengetriebe oder einem Spindelgetriebe wird eine Selbsthemmung üblicherweise dann erreicht, wenn ein Steigungswinkel eines Schneckengewindes bzw. eines Spindelgewindes kleiner ist als der Arcustangens der Haftreibungszahl.

Die Verstellkinematik ist vorzugsweise dynamisch und statisch selbsthemmend. Ein Drehmoment auf der Abtriebsseite kann weder bei dynamischer Bewegung noch im statischen Ruhezustand für sich allein ein Bewegen der Verstellkinematik bewirken.

Während bei nicht bestromtem Verstellantrieb die Innenraumbaugruppe durch die Verstellkinematik in Position gehalten wird und somit auch durch abtriebseitig an der Innenraumbaugruppe bewirkte Nutzerkraft nicht verstellt werden kann, kann die Innenraumbaugruppe manuell in Bewegung versetzt werden, wenn der Verstellantrieb in einem Verstellmodus einen Unterstützungsstrom bereitstellt und dadurch die Selbsthemmung der Verstellkinematik aufgehoben wird. Hierzu ist die Steuereinrichtung ausgebildet, den Verstellmodus in Abhängigkeit von einem Triggerkriterium zu aktivieren und, bei aktiviertem Verstellmodus, dem Verstellantrieb einen Unterstützungsstrom zuzuführen, der bewirkt, dass die Selbsthemmung der Verstellkinematik aufgehoben wird. Dies führt dazu, dass eine manuelle Nutzerkraft an der Innenraumbaugruppe zu einer Bewegung an der Innenraumbaugruppe führt und die Innenraumbaugruppe somit durch manuelle Nutzerkraft in Bewegung versetzt werden kann. Durch Speisen des Verstellantriebs mit dem Unterstützungsstrom wird die an sich selbsthemmende Verstellkinematik somit freigeschaltet und kann durch Einleiten einer abtriebseitigen Kraft bewegt werden.

Die Verstellkinematik kann beispielsweise ein Schneckengetriebe oder ein Spindelgetriebe verwirklichen. Bei einem Schneckengetriebe steht eine Antriebsschnecke über eine Schneckenverzahnung mit einem Antriebsrad in Getriebeeingriff. Bei einem Spindelgetriebe weist eine Spindel ein Spindelgewinde auf, das mit einem Innengewinde einer Spindelmutter in Gewindeeingriff steht, wobei durch Drehen der Spindel oder, alternativ, durch Drehen der Spindelmutter eine Längsbewegung der Spindelmutter relativ zu der Spindel bewirkt werden kann.

Ein Verstellen der Innenraumbaugruppe soll nicht stets möglich sein, sondern nur in bestimmten Situationen. Hierzu wertet die Steuereinrichtung ein oder mehrere Triggerkriterien aus, um in Abhängigkeit von den Triggerkriterien zu bestimmen, ob der Verstellmodus aktiviert werden soll oder nicht. Liegen ein oder mehrere Triggerkriterien vor, so wird der Verstellmodus gestartet, und entsprechend speist die Steuereinrichtung den Verstellantrieb mit dem Unterstützungsstrom, sodass die Selbsthemmung der Verstellkinematik durch eine von dem Verstellantrieb an der Verstellkinematik bereitgestellte Verstellkraft überwunden wird und somit die Innenraumbaugruppe durch eine abtriebseitig an der Innenraumbaugruppe eingeleitete manuelle Nutzerkraft in eine Bewegung versetzt werden kann.

Dadurch, dass der Verstellmodus in Abhängigkeit von einem oder mehreren Triggerkriterien gestartet wird, kann eine Sensorik zum Initiieren des Verstellmodus und zum Erkennen eines Verstellwunsches vereinfacht werden. Insbesondere ist keine Sensorik erforderlich, die eine Nutzergeste überwacht und auswertet. Der Verstellmodus kann anhand von vergleichsweise einfach zu ermittelnden Kriterien gestartet werden, beispielsweise einem Öffnungszustand einer Fahrzeugtür oder einem Belegungszustand eines Fahrzeugsitzes, wobei nach Aktivieren des Verstellmodus eine Nutzerinteraktion beispielsweise anhand einer Bewegung der Innenraumbaugruppe erkannt werden kann, zum Beispiel unter Verwendung von (ohnehin vorhandenen) Hallsensoren des Verstellantriebs zum Erfassen der Bewegung einer Motorwelle.

Weil eine Bewegungserkennung an der Innenraumbaugruppe somit keine aufwändige Sensorik erfordert, kann die Steuerung und Auswertung insgesamt vereinfacht sein.

Der Unterstützungsstrom ist so bemessen, dass eine durch den Unterstützungsstrom bewirkte Verstellkraft die Innenraumbaugruppe nicht bewegt. Bei Aktivierung des Verstellmodus wird der Verstellantrieb somit derart bestromt, dass an der Verstellkinematik eine Verstellkraft zur Überwindung der Selbsthemmung bereitgestellt wird, die Verstellkinematik durch den Unterstützungsstrom jedoch nicht bewegt und somit auch die Innenraumbaugruppe nicht verstellt wird. Durch Bestromung mit dem Unterstützungsstrom bei Aktivierung des Verstellmodus wird somit (lediglich) die Selbsthemmung überwunden, es erfolgt jedoch noch keine Verstellbewegung.

Alternativ kann bei Aktivierung des Verstellmodus die Innenraumbaugruppe mit einer Bewegungsgeschwindigkeit unterhalb einer Grenzgeschwindigkeit bewegt werden. Die Innenraumbaugruppe wird somit langsam in Bewegung versetzt, wobei durch Nutzerinteraktion an der Innenraumbaugruppe die eigentliche Verstellbewegung durch (schnelleres) Verstellen der Innenraumbaugruppe gestartet werden kann.

Die Grenzgeschwindigkeit kann beispielsweise in einem Bereich zwischen 1/10000 m/s und 1/100 m/s liegen.

Der Unterstützungsstrom ist so bemessen, dass eine durch den Unterstützungsstrom bewirkte Verstellkraft die Innenraumbaugruppe nicht bewegen soll. Dabei wird nach Aktivierung des Verstellmodus geprüft, ob sich die Innenraumbaugruppe zu bewegen beginnt. Ist dies der Fall, zum Beispiel weil eine Last an der Innenraumbaugruppe wirkt, wird der Verstellmodus abgebrochen. Nach Aktivierung des Verstellmodus muss somit zum Beispiel für eine vorbestimmte Zeit (z.B. 1s) Stillstand vorliegen, um den Verstellmodus nachfolgend gültig zu starten.

Die Bestromung mit dem (vorzugsweise pulsweitenmodulierten) Unterstützungsstrom erfolgt somit so niedrigenergetisch, dass sich die Innenraumbaugruppe noch nicht bewegt oder, alternativ, dass sich der Verstellantrieb und entsprechend auch die Innenraumbaugruppe zum Beispiel langsam zu bewegen beginnen. Greift ein Nutzer an der Innenraumbaugruppe an, so kann der Nutzer die Innenraumbaugruppe durch Nutzerkraft verstellen, weil die Selbsthemmung der Verstellkinematik durch den Unterstützungsstrom (zumindest in eine Bewegungsrichtung) aufgehoben ist.

Bei der Bestromung kann ein Übergang von Haftreibung (bei Stillstand) auf Gleitreibung (bei Bewegung) berücksichtigt werden. So kann, um die Innenraumbaugruppe in Bewegung zu versetzen, zunächst ein Stromimpuls mit größerer Stromstärke eingespeist werden, bis sich die Innenraumbaugruppe (unter Berücksichtigung und Überwindung eines Spiels) bewegt. Während einer langsamen Bewegung kann dann mit einem niedrigeren Stromwert gespeist werden.

In einer Ausgestaltung ist die Steuereinrichtung dazu ausgebildet, den Unterstützungsstrom durch Pulsweitenmodulation einzustellen. Der Unterstützungsstrom kann hierbei beispielsweise durch Verwendung eines vergleichsweise kleinen Lastfaktors, zum Beispiel zwischen 1 % und 10 %, eingestellt werden und wird somit auf einen vergleichsweise geringen Effektivwert eingestellt.

Statt mittels einer Pulsweitenmodulation ist auch denkbar, den Strom mittels eines Linearreglers einzustellen.

In einer Ausgestaltung ist die Steuereinrichtung dazu ausgebildet, in dem Verstellmodus den Unterstützungsstrom anhand eines fest vorgegebenen Werts einzustellen. Der Wert kann beispielsweise fest programmiert sein und ist somit im Betrieb unveränderlich. Anhand des fest vorgegebenen Werts wird der Unterstützungsstrom bei Aktivierung des Verstellmodus eingestellt.

Statt auf einen konstanten Wert kann der Unterstützungstrom auch verstellwegabhängig oder anhand einer Kurve oder Tabelle eingestellt werden, um Eigenheiten von Kinematiken auszugleichen (z.B. bei einem Taumelgetriebe).

In einer Ausgestaltung kann der Wert des Unterstützungsstroms eingemessen werden, wobei hierzu die Steuereinrichtung eine Kalibrationsroutine ausführt und im Rahmen der Kalibrationsroutine den Wert des Unterstützungsstroms bemisst. Die Steuereinrichtung kann dazu ausgestaltet sein, die Kalibrationsroutine einmalig vor Inbetriebnahme der Antriebsvorrichtung durchzuführen. Die Steuereinrichtung kann zusätzlich oder alternativ dazu ausgestaltet sein, die Kalibrationsroutine wiederholt durchzuführen, wobei die Kalibrationsroutine außerhalb des eigentlichen Verstellmodus durchgeführt wird, um den Wert des Unterstützungsstroms zu bestimmen.

Die Kalibrationsroutine kann beispielsweise derart durchgeführt werden, dass die Steuereinrichtung den Strom des Verstellantriebs von 0 steigert und bestimmt, ab welchem Stromwert es an dem Verstellantrieb und der nachgeschalteten Verstellkinematik zu einer Bewegung kommt. Der Wert des Unterstützungsstroms wird dann zum Beispiel auf einen solchen Wert eingestellt, bei dem es gerade noch nicht zu einer Bewegung an dem Verstellantrieb kommt. Die Bewegung des Verstellantriebs kann zum Beispiel unter Verwendung von Hallsensoren des Verstellantriebs überwacht werden, sodass für die Kalibrierung keine zusätzliche Sensorik erforderlich ist.

In einer Ausgestaltung ist die Steuereinrichtung dazu ausgebildet, bei aktiviertem Verstellmodus den Verstellantrieb wechselseitig in unterschiedliche Verstellrichtungen zu bestromen. Die Steuereinrichtung speist den Verstellantrieb somit mit einem Unterstützungsstrom alternierend in die eine oder die andere Bewegungsrichtung, wobei der Unterstützungsstromwert in beide Bewegungsrichtungen gleich sein kann oder der Unterstützungsstromwert abhängig von der Bewegungsrichtung unterschiedlich ist. Durch die wechselseitige Bestromung, zum Beispiel mit einer Bestromungsdauer in jede Bewegungsrichtung zwischen 0,1 Sekunden und 1 Sekunde, zum Beispiel 0,5 Sekunden, kann erreicht werden, dass ein manuelles Verstellen der Innenraumbaugruppe in beide Bewegungsrichtungen ermöglicht werden kann, die Selbsthemmung also alternierend in beide Bewegungsrichtungen freigeschaltet wird. Wird eine Nutzerinteraktion für eine Bewegung der Innenraumbaugruppe in eine bestimmte Bewegungsrichtung erkannt, so wird anschließend ein Unterstützungsstrom beispielsweise ausschließlich in die erkannte Bewegungsrichtung zur Verfügung gestellt, sodass die Innenraumbaugruppe durch Nutzerkraft in die erkannte Bewegungsrichtung verstellt werden kann.

Bei der alternierenden Bestromung kann ein Umkehrspiel (oder auch Elastizität) in der Kinematik berücksichtigt werden. Ein solches Umkehrspiel kann dazu führen, dass Hallcounts an der Motorwelle auftreten, ohne dass sich die Innenbaumgruppe bewegt.

In dem Verstellmodus ist ein manuelles Verstellen der Innenraumbaugruppe möglich. In dem Verstellmodus sind hierbei unterschiedliche Betriebsarten für ein manuelles Verstellen denkbar und möglich.

In einer Betriebsart kann in dem Verstellmodus durch Bestromung des Verstellantriebs mit dem Unterstützungsstrom die Selbsthemmung der Verstellkinematik aufgehoben sein, wobei eine weitere Steuerung nicht erfolgt, das Verstellen der Innenraumbaugruppe somit rein manuell durch Angreifen eines Nutzers an der Innenraumbaugruppe erfolgt. Eine weitere, elektromotorische Unterstützung des Verstellens über die Bestromung zur Überwindung der Serlbsthemmung hinaus erfolgt somit nicht. Es ergibt sich eine besonders einfache Betriebsart, bei der eine weitere Steuerung zum manuellen Verstellen nicht erforderlich ist.

In einer anderen Betriebsart kann in dem Verstellmodus eine Nutzerinteraktion erkannt werden, um anhand einer erkannten Nutzerinteraktion sodann eine weitere Steuerung vorzunehmen.

In einer Ausgestaltung ist die Steuereinrichtung dazu ausgebildet, bei aktiviertem Verstellmodus eine Nutzerinteraktion an der Innenraumbaugruppe anhand einer Bewegung der Innenraumbaugruppe zu erkennen. Die Bewegung der Innenraumbaugruppe kann unter Verwendung von Hallsensoren des Verstellantriebs erfasst werden, indem bei einem Bewegen der Innenraumbaugruppe die (durch den Unterstützungsstrom aus der Selbsthemmung freigeschaltete) Verstellkinematik und der Verstellantrieb mitbewegt werden und somit eine Bewegung der Motorwelle durch Hallsensoren an der Motorwelle des Verstellantriebs erkannt und ausgewertet werden kann.

Statt anhand einer Bewegung kann eine Nutzerinteraktion zum Beispiel anhand einer Motorkenngröße, zum Beispiel anhand des Motorstroms oder der Motorspannung, erkannt werden werden. Bei einer Spannungsregelung sinkt beispielsweise der Strom bei Bewegung. Bei einer Stromregelung sinkt hingegen die Spannung. Eine Erkennung kann zum Beispiel auch anhand eines im Strom identifizierbaren Motorripple erfolgen.

Bei erkannter Nutzerinteraktion kann die Steuereinrichtung beispielsweise dazu ausgestaltet sein, in einen Servobetrieb zu schalten. Die Steuereinrichtung ist in diesem Fall dazu ausgebildet, den Verstellantrieb in dem Servobetrieb zum Bereitstellen einer unterstützenden Kraft bei einer manuellen Verstellung der Innenraumbaugruppe durch einen Nutzer anzusteuern. Das Verstellen der Innenraumbaugruppe (beispielsweise in Form eines Fahrzeugsitzes, eines Konsolenelements, eines Monitors, einer Trennwand, einer Ablage, eines Staufachs oder dergleichen) erfolgt somit grundsätzlich manuell durch einen Nutzer, jedoch bei elektromotorischer Unterstützung durch die Antriebsvorrichtung in einem Servobetrieb. Ein Nutzer muss somit zum Verstellen der Innenraumbaugruppe nicht die vollständige Kraft zur Verfügung stellen, die zum Überwinden von an der Innenraumbaugruppe wirkenden Lasten erforderlich ist, sondern nur eine Teilkraft. Dies ermöglicht ein intuitives, komfortables Verstellen der Innenraumbaugruppe durch einen Nutzer bei elektromotorischer Unterstützung durch die Antriebsvorrichtung. Dies ermöglicht zudem ein schnelles und variables Verstellen bei geringer von einem Nutzer aufzubringender Kraft. Das Verstellen der Innenraumbaugruppe, beispielsweise eines Fahrzeugsitzes, kann somit dadurch bewirkt werden, dass ein Nutzer an der Innenraumbaugruppe angreift und dadurch auf die Innenraumbaugruppe zum Verstellen in eine gewünschte Position einwirkt, wobei der Nutzer zum Verstellen nur eine geringe Kraft aufzubringen hat und eine darüber hinaus erforderliche Kraft durch die elektromotorische Antriebsvorrichtung bereitgestellt wird.

In einer anderen Betriebsart kann die Steuereinrichtung dazu ausgebildet sein, den Verstellantrieb in einem Anstupsbetrieb zum Bewegen der Innenraumbaugruppe nach einem von einem Nutzer bewirkten Impuls an der Innenraumbaugruppe anzusteuern, wobei die Steuereinrichtung ausgebildet ist, bei aktiviertem Verstellmodus eine Nutzerinteraktion an der Innenraumbaugruppe zu erkennen und den Anstupsbetrieb anhand der erkannten Nutzerinteraktion zu starten. Im Rahmen eines solchen Anstupsbetriebs kann ein Nutzer die Innenraumbaugruppe durch Aufbringen eines Impulses an der Innenraumbaugruppe anstupsen, sodass sich die Innenraumbaugruppe in Bewegung setzt. Weil die Selbsthemmung der Verstellkinematik aufgehoben ist, bewegt sich die Innenraumbaugruppe nach dem Anstupsen selbsttätig, wobei die Steuereinrichtung die Bewegung der Innenraumbaugruppe zum Beispiel so steuern kann, dass die Innenraumbaugruppe selbsttätig, also ohne weiteres Aufbringen einer Nutzerkraft, bis in eine definierte Position bewegt wird. Nach dem Erkennen der Nutzerinteraktion kann hierbei der Strom des Verstellantriebs so gesteuert werden, dass der Strom beispielsweise vergrößert und die Innenraumbaugruppe somit zum Beispiel mit vorgegebener, gesteuerter Bewegungsgeschwindigkeit bis in eine Endposition verfahren wird.

Die Innenraumbaugruppe kann beispielsweise um eine Schwenkachse verschwenkbar und/oder entlang einer Längsrichtung verschiebbar sein. Ist die Innenraumbaugruppe zum Beispiel durch einen Fahrzeugsitz ausgestaltet, so kann der Fahrzeugsitz insgesamt entlang eines Fahrzeugbodens verstellbar sein, beispielsweise entlang einer Fahrzeuglängsrichtung und/oder entlang einer Fahrzeugquerrichtung. Zusätzlich oder alternativ kann der Fahrzeugsitz um eine Fahrzeugvertikalrichtung drehbar sein, sodass auch die Drehstellung des Fahrzeugsitzes im Fahrzeuginnenraum angepasst werden kann. Zudem sind gegebenenfalls Baugruppen des Fahrzeugsitzes, wie zum Beispiel ein Rückenlehnenteil oder eine Sitzfläche, verstellbar, beispielsweise um eine Neigungs und/oder Höhenstellung anzupassen.

Eine Verstellbarkeit kann auch an anderen Innenraumbaugruppen wie zum Beispiel an einem Konsolenelement vorgesehen sein. Ein Konsolenelement kann zum Beispiel entlang eines Fahrzeugbodens verschiebbar sein, wobei gegebenenfalls auch eine Höhenstellung des Konsolenelements oder eine Drehstellung anpassbar sein kann. Ein Monitor kann beispielsweise in seiner Schwenkstellung, seiner Drehstellung, seiner Höhenstellung und in seiner Neigung veränderbar sein.

Die Verstellbewegungen der Innenraumbaugruppe insgesamt oder von einzelnen (Unter-)Baugruppen der Innenraumbaugruppe können durch ein oder mehrere Antriebsvorrichtungen bewirkt werden, wobei das Verstellen manuell durch einen Nutzer vorgenommen und elektromotorisch durch eine jeweilige Antriebsvorrichtung unterstützt wird.

Der Verstellmodus, innerhalb dessen ein Verstellen der Innenraumbaugruppe durch einen Nutzer möglich ist, kann zum Beispiel nach einer vorbestimmten Zeit wieder beendet werden. Alternativ kann eine Beendigung des Verstellmodus nach einer vorbestimmten Zeit nach einer Verstellaktion beendet werden.

Wiederum kann der Verstellmodus beendet werden, wenn eine elektrische Verstellung zum Beispiel auf Tastendruck im Automatikbetrieb eingeleitet wird.

Bei einem Triggerkriterium kann es sich beispielsweise um einen Belegungszustand der Innenraumbaugruppe handeln. Handelt es sich bei der Innenraumbaugruppe beispielsweise um einen Fahrzeugsitz oder eine Baugruppe eines Fahrzeugsitzes, beispielsweise die Rückenlehne eines Fahrzeugsitzes, so stellt die Steuereinrichtung den Verstellmodus beispielsweise nur dann zur Verfügung, wenn der Fahrzeugsitz nicht durch einen Fahrzeuginsassen belegt ist. Beispielsweise nur bei leerem Fahrzeugsitz soll die Rückenlehne zu verstellen sein. Der Belegungszustand kann hierbei beispielsweise anhand eines (kapazitiven) Belegungssensors, anhand des Zustands eines Gurtschlosses oder auch durch eine Innenraumüberwachungseinrichtung ausgewertet werden.

Bei einem Triggerkriterium kann es sich auch um einen Bewegungszustand der Innenraumbaugruppe handeln. Wird beispielsweise ein vorderer Fahrzeugsitz bewegt, so kann zum Beispiel eine Antriebsvorrichtung an einem hinteren Fahrzeugsitz oder an einer Mittelkonsole in den Verstellmodus geschaltet werden, um eine Bewegung an dem hinteren Fahrzeugsitz oder der Mittelkonsole zu ermöglichen.

Bei einem anderen Triggerkriterium kann es sich um den Öffnungszustand einer Fahrzeugtür, insbesondere einer Fahrzeugseitentür oder einer Heckklappe, handeln. Beispielsweise kann die Steuereinrichtung dazu ausgebildet sein, den Verstellmodus zu aktivieren, sobald eine Fahrzeugseitentür geöffnet wird. Wird beispielsweise die rechte, hintere Fahrzeugseitentür geöffnet, so kann der Verstellmodus für einen Fahrzeugsitz rechts hinten und/oder rechts vorne gestartet werden. Wird demgegenüber die linke, hintere Fahrzeugseitentür geöffnet, so wird beispielsweise der Verstellmodus für einen Fahrzeugsitz links hinten und/oder links vorne gestartet. Wird festgestellt, dass die Heckklappe geöffnet wird, so kann der Verstellmodus beispielsweise für eine hintere Sitzreihe in einem Fahrzeug gestartet werden.

Als zusätzliches Kriterium kann ein Fahrzustand des Fahrzeugs ausgewertet werden. So kann der Verstellmodus beispielsweise nur bei Stillstand des Fahrzeugs möglich sein. Alternativ kann der Verstellmodus bei Stillstand des Fahrzeugs, gegebenenfalls aber auch bei Fahrt aktiviert werden. Bei Fahrt des Fahrzeugs kann hierbei situationsabhängig der Verstellmodus unterbunden werden, beispielsweise abhängig von der Fahrtgeschwindigkeit des Fahrzeugs oder bei einer sogenannten "Precrash"-Warnung, die auf einen möglicherweise drohenden Crash hinweist. Befindet sich die Antriebsvorrichtung bei einer solchen "Precrash"-Warnung gerade im Verstellmodus, so kann der Verstellmodus abgeschaltet und die Innenraumbaugruppe in ihrer gerade eingenommenen Position arretiert werden, um gegebenenfalls Crashkräfte aufnehmen und ableiten zu können.

Als anderes Triggerkriterium kann beispielsweise auch ein Sensorsignal einer Sensoreinrichtung, zum Beispiel einer Innenraumüberwachungseinrichtung (zum Beispiel eines Radar- oder Lidarsystems) oder eines Bewegungssensors an einer Innenraumbaugruppe, ausgewertet werden.

Weitere Triggerkriterien können sein: Verstellung einer benachbarten Innenraumbaugruppe; Betätigen der Fahrzeugzündung; eine dedizierte Nutzeraktion (z.B. Betätigen einer Taste am Sitz oder am Menü im Bordcomputer oder ein Sprachbefehl).

Ein Abschalten des Verstellmodus nach einem Triggerkriterium oder einer Kombination von Triggerkriterien kann zum Beispiel erfolgen: wenn ein Triggerkriterium nicht mehr vorliegt; nach einer erfolgten Verstellung; zeitgesteuert; bei abgestelltem Fahrzeug, zum Beispiel anhand eines "Strombudgets".

In einer Ausgestaltung ist die Steuereinrichtung dazu ausgebildet, nach dem Aktivieren des Verstellmodus ein Hinweissignal als Hinweis auf den Verstellmodus zum Ausgeben an einen Nutzer zu erzeugen. So kann die Steuereinrichtung beispielsweise ein Hinweissignal erzeugen, das über eine Fahrzeugeinrichtung, wie zum Beispiel ein Audiosystem des Fahrzeugs, ausgegeben wird, um dem Nutzer zu signalisieren, dass der Verstellmodus zum Verstellen gestartet worden ist. Zusätzlich oder alternativ kann das Hinweissignal darin bestehen, dass die Steuereinrichtung den Verstellantrieb zum Verfahren der Innenraumbaugruppe zum Beispiel mit einer langsamen Bewegungsgeschwindigkeit oder durch Erzeugen einer Vibrationsbewegung an der Innenraumbaugruppe in einer für den Nutzer wahrnehmbaren Weise ansteuert. Wiederum zusätzlich oder alternativ kann die Steuereinrichtung beispielsweise ein solches moduliertes Bestromungssignal erzeugen und an den Verstellantrieb abgeben, dass der Verstellantrieb zu einer vorbestimmten Geräuscherzeugung, zum Beispiel zum Erzeugen von Tönen, angeregt wird. Der Verstellantrieb wird somit derart bestromt, dass ein Signal im hörbaren Bereich an dem Verstellantrieb erzeugt wird.

Der Verstellantrieb kann beispielsweise als Gleichstrommotor, besonders vorteilhaft als bürstenloser Gleichstrommotor ausgebildet sein.

Die Steuereinrichtung kann in den Verstellantrieb integriert sein, kann aber auch separat vom Verstellantrieb ausgebildet sein, beispielweise durch ein Sitzsteuergerät oder ein Zentralsteuergerät in dem Fahrzeug.

In einer Ausgestaltung weist die Steuereinrichtung ein Stromregelungsmodul zum Regel eines Stroms des Verstellantriebs auf. Bei Aktivierung des Verstellmodus kann das Stromregelungsmodul insbesondere den Unterstützungsstrom so auf einen definierten (vorgegebenen oder eingemessenen) Wert regeln, dass die Selbsthemmung der

EP 4 387 867 B1

Verstellkinematik aufgehoben und somit die Innenraumbaugruppe manuell in Bewegung versetzt werden kann.

Zum Ansteuern des Verstellantriebs erfolgt somit vorteilhafterweise eine Stromregelung, wobei angemerkt sei, dass alternativ beispielsweise auch eine Spannungsregelung erfolgen kann und somit die Regelung des Verstellantriebs nicht auf eine Stromregelung beschränkt ist.

In einer Ausgestaltung weist die Steuereinrichtung ein Stellmodul zum Bestimmen eines Sollwerts in Abhängigkeit von einer an der Innenraumbaugruppe wirkenden Last auf. Das Stromregelungsmodul ist in diesem Fall dazu ausgebildet, den Strom des Verstellantriebs anhand des von dem Stellmodul zugeführten Sollwerts zu regeln.

Das Stellmodul kann bei Aktivierung des Verstellmodus den Wert des Unterstützungsstroms so anpassen, dass zum Beispiel eine Schwerkraft abhängig von der Lage des Fahrzeugs mit berücksichtigt wird und der Unterstützungsstrom somit bewegungsrichtungabhängig so eingestellt wird, dass (auch) die Schwerkraft mit ausgeglichen wird. Das Stellmodul gibt somit einen Sollwert für den Strom vor, der anhand des vorgegebenen Werts für den Unterstützungsstrom eingestellt, dabei anhand zusätzlicher Parameter aber angepasst ist, zum Beispiel anhand der Fahrzeugneigung und/oder -steigung.

Zudem kann das Stellmodul in einem Servobetrieb den Sollwert für den Strom so vorgeben, dass die vom Verstellantrieb bereitgestellte Kraft den Nutzer in der Bewegung der Innenraumbaugruppe derart unterstützt, dass die vom Nutzer aufzubringende Kraft nach Möglichkeit zumindest näherungsweise gleich ist (oder einer gewünschten Kurve folgt) und sich für den Nutzer somit eine komfortable, haptisch angenehme Verstellung der Innenraumbaugruppe ergibt.

In einer Ausgestaltung weist die Steuereinrichtung zusätzlich ein Lastberechnungsmodul auf, das dem Stellmodul vorgeschaltet ist und dazu dient, eine an der Innenraumbaugruppe wirkende Last zu bestimmen. Bei der Last handelt sich um eine unabhängig von einer aufgebrachten Nutzerkraft an der Innenraumbaugruppe wirkende Kraft, die insbesondere einem Verstellen der Innenraumbaugruppe entgegenwirken (oder die Bewegung der Innenraumbaugruppe gegebenenfalls auch unterstützen) und beispielsweise von der Fahrzeuglage, einer Verstellrichtung der Innenraumbaugruppe und einer aktuellen Verstellposition der Innenraumbaugruppe abhängen kann.

Das Lastberechnungsmodul kann insbesondere dazu ausgestaltet sein, eine an der Innenraumbaugruppe wirkende statische und/oder dynamische Last zu bestimmen. Die Last kann beispielsweise in Abhängigkeit von einem um eine Fahrzeuglängsachse gemessenen Neigungswinkel des Fahrzeugs, einem um die Fahrzeuglängsachse gemessenen Neigungswinkel einer Schwenkachse der Innenraumbaugruppe, einem um eine Fahrzeugquerachse gemessenen Steigungswinkel des Fahrzeugs, einem um die Fahrzeugquerachse gemessenen Steigungswinkel der Schwenkachse der Innenraumbaugruppe und/oder einem Öffnungswinkel der Innenraumbaugruppe bestimmt werden.

In Abhängigkeit von der Neigung des Fahrzeugs (gemessen um die Fahrzeuglängsachse, auch bezeichnet als Rollwinkel) und/oder in Abhängigkeit von der Steigung des Fahrzeugs (gemessen um die Fahrzeugquerachse, auch bezeichnet als Nickwinkel oder Pitchwinkel) wirken Schwerkräfte auf die Innenraumbaugruppe. Solche Schwerkräfte können beispielsweise in Richtung einer gewünschten Verstellbewegung oder entgegengesetzt zur Verstellbewegung wirken. Wirkt die Schwerkraft dem Verstellen entgegen, muss ein Nutzer bei einem Verstellen der Innenraumbaugruppe zum Beispiel entgegen einer aufgrund der Schwerkraft an der Innenraumbaugruppe wirkenden Kraft arbeiten, wobei die durch den Verstellantrieb bereitgestellte, unterstützende Kraft vorzugsweise so eingestellt werden soll, dass zum Beispiel im Servobetrieb die vom Nutzer aufzubringende Kraft unabhängig von der Lage des Fahrzeugs und von der Position der Innenraumbaugruppe gleich bleibt oder einer gewünschten Kurve folgt. Die vom Verstellantrieb bereitzustellende, unterstützende Kraft verändert sich somit mit der Fahrzeuglage und der Position und Verstellrichtung der Innenraumbaugruppe und wird entsprechend so vorgegeben, dass sich für einen Nutzer vorzugsweise eine zumindest näherungsweise gleichbleibende Verstellkraft im Servobetrieb ergibt.

Zusätzlich können Reibkräfte an der Innenraumbaugruppe wirken, die ebenfalls durch das Lastberechnungsmodul zum Berechnen der an der Innenraumbaugruppe wirkenden Last mit einbezogen werden können.

Zusätzlich oder alternativ kann auch die Temperatur oder ein Alterungszustand berücksichtigt werden.

In einer Ausgestaltung ist das Stellmodul dazu ausgebildet, anhand der an der Innenraumbaugruppe wirkenden Last, wie sie vom Lastberechnungsmodul berechnet und dem Stellmodul zugeführt wird, und zusätzlich anhand eines von einem Nutzer aufzubringenden Zielkraftwerts eine durch den Verstellantrieb bereitzustellende Sollkraft für den Servobetrieb zu bestimmen. Der Zielkraftwert entspricht der gewünschten Kraft, die ein Nutzer beim Verstellen der Innenraumbaugruppe aufzubringen hat. Durch das Stellmodul soll der Sollwert für die Stromregelung so vorgegeben werden, dass der Verstellantrieb eine Kraft bereitstellt, die den Nutzer beim Verstellen der Innenraumbaugruppe derart unterstützt, dass der Nutzer zumindest näherungsweise nur eine dem Zielkraftwert entsprechende Nutzerkraft aufzubringen hat.

Anhand der Sollkraft bestimmt das Stellmodul dann, in einer Ausgestaltung, den Sollwert und führt diesen Sollwert dem Stromregelungsmodul zu. Im Stromregelungsmodul erfolgt eine Stromregelung anhand des durch das Stellmodul bereitgestellten Sollwerts.

In einer Ausgestaltung ist das Stromregelungsmodul dazu ausgebildet, den Strom des Verstellantriebs unter Verwendung einer Pulsweitenmodulation einzustellen. Im Stromregelungsmodul erfolgt eine Stromregelung anhand des jeweils zugeführten, vom Betriebsmodus abhängigen Sollwerts. Das Stromregelungsmodul gibt eine Stellgröße aus, anhand derer die dem Verstellantrieb zugeführte Spannung mit einer Pulsweitenmodulation hoher Frequenz, zum

7

Beispiel mit einer Frequenz zwischen 5 kHz und 100 kHz oder gar darüber eingestellt wird.

Alternativ kann der Strom auch über einen Linearregler eingestellt werden.

Im Stromregelungsmodul erfolgt eine Regelung anhand des jeweils zugeführten Sollwerts und des sich ergebenden, tatsächlich Motorstroms. Der Strom des Verstellantriebs wird durch Regelung somit so eingestellt, dass er dem Sollwert entspricht.

Ein Verstellen einer oder mehrere Verstellebenen einer oder mehrere Innenraumbaugruppen kann gleichzeitig erfolgen. Beispielsweise kann an einem Fahrzeugsitz für eine oder mehrere Antriebsvorrichtungen gleichzeitig eine Selbsthemmung aufgehoben und ein Verstellvorgang eingeleitet werden, um den Fahrzeugsitz zum Beispiel gleichzeitig - in einem Bewegungsablauf - längs zu verschieben und zu drehen. Dies ermöglicht eine komfortable, zügige, intuitive Verstellung von Innenraumbaugruppen durch einen Nutzer.

Bei dem Verstellantrieb der Antriebsvorrichtung kann es sich beispielsweise um einen bürstenlosen Gleichstrommotor (BLDC-Motor) handeln. Grundsätzlich können jedoch auch andere Motoren verwendet werden.

Unterschiedliche Applikationen für eine Antriebsvorrichtung der beschriebenen Art sind denkbar und möglich.

In einer Applikation kann die Innenraumbaugruppe zum Beispiel durch einen Fahrzeugsitz verwirklicht sein. Die Antriebsvorrichtung kann hierbei insbesondere zum Verstellen einer Rückenlehne des Fahrzeugsitzes relativ zu einem Sitzteil des Fahrzeugsitzes ausgebildet sein. Alternativ kann die Antriebsvorrichtung für eine Sitzlängsverstellung ausgebildet sein. Wiederum alternativ kann die Antriebsvorrichtung für eine Sitzhöhenverstellung ausgebildet sein.

In anderer Applikation kann die Innenraumbaugruppe zum Beispiel durch ein Konsolenelement, zum Beispiel eine Mittelkonsole, eine Armlehne, einen Tisch oder eine andere Baugruppe im Fahrzeuginnenraum verwirklicht sein.

In einer Applikation ist die Innenraumbaugruppe durch einen Fahrzeugsitz verwirklicht und kann im Rahmen einer sogenannten Easy-Entry-Funktion in eine Easy-Entry-Stellung bewegt werden, in der der Fahrzeugsitz zum einen mit einer Rückenlehne nach vorne geklappt ist und zum anderen im Ganzen in eine vordere Stellung verschoben ist, sodass ein Raum hinter dem Fahrzeugsitz freigegeben ist, insbesondere für einen erleichterten Einstieg auf eine hinter dem Fahrzeugsitz gelegene Sitzreihe. In diesem Fall kann der Fahrzeugsitz beispielsweise zwei Antriebsvorrichtungen mit je einem elektromotorischen Verstellantrieb und einer Verstellkinematik aufweisen, über die zum einen der Fahrzeugsitz längs im Fahrzeug verschiebbar und zum anderen die Rückenlehne des Fahrzeugsitzes relativ zu einem Sitzteil des Fahrzeugsitzes verschwenkbar ist. Auf einer oder auf beiden Antriebsvorrichtungen kann abhängig von zumindest einem Triggerkriterium ein Verstellmodus aktiviert werden, um den Fahrzeugsitz in die Easy-Entry-Stellung zu überführen oder aus der Easy-Entry-Stellung zurück in eine Normalgebrauchsstellung zu bringen.

Im Rahmen einer solchen Applikation kann eine Easy-Entry-Funktion beispielsweise aktiviert werden, wenn an dem Rückenlehnenteil des Fahrzeugsitzes eine Schwenkbewegung oder an dem Fahrzeugsitz eine Längsbewegung im Rahmen des Verstellmodus erkannt wird. Ist der Verstellmodus beispielsweise auf der Antriebsvorrichtung zum Verstellen des Rückenlehnenteils relativ zum Sitzteil implementiert, wird der Verstellmodus in Abhängigkeit zumindest eines Triggerkriteriums aktiviert und bei aktiviertem Verstellmodus ein Unterstützungsstrom bereitgestellt, durch den die Selbsthemmung an der Verstellkinematik der Antriebsvorrichtung überwunden wird und das Rückenlehnenteil somit manuell durch einen Nutzer bewegt werden kann. Eine solche Bewegung kann erkannt werden, um sodann in Abhängigkeit der Bewegungserkennung eine Easy-Entry-Verstellung zu starten, im Rahmen derer der Fahrzeugsitz in eine definierte Easy-Entry-Stellung gebracht wird. Der Verstellmodus der Antriebsvorrichtung dient somit zum initialen Erkennen einer Bewegung an dem Fahrzeugsitz. Wird eine Bewegung erkannt, erfolgt die weitere Verstellung in die der Easy-Entry-Stellung entsprechende Endstellung automatisch und elektromotorisch durch ein oder mehrere elektromotorische Antriebsvorrichtungen des Fahrzeugsitzes.

Beispielsweise kann ein Nutzer, der auf einem Fahrzeugsitz hinter einem davor gelegenen Fahrzeugsitz sitzt und aus dem Fahrzeug aussteigen möchte, auf die Rückenlehne des davor gelegenen Fahrzeugsitzes drücken. Befindet sich die der Verstellung der Rückenlehne zugeordnete Antriebsvorrichtung dieses Fahrzeugsitzes in dem Verstellmodus, so kann die Rückenlehne manuell bewegt werden, wobei die Bewegung erkannt wird und sodann zu einem automatischen Verstellen des gesamten Fahrzeugsitzes in die Easy-Entry-Stellung führt und somit das Rückenlehnenteil relativ zum Sitzteil in eine vorgeklappte Position verschwenkt und der Fahrzeugsitz insgesamt in eine nach vorne verschobene Position verstellt wird.

Möchte demgegenüber ein Nutzer von außerhalb des Fahrzeugs auf eine Sitzreihe hinter einem davor gelegenen Fahrzeugsitz einsteigen und zieht oder drückt dafür, bei geöffneter Fahrzeugtür, an dem Rückenlehnenteil des Fahrzeugsitzes, so wird das Rückenlehnenteil im Rahmen des Verstellmodus manuell in Bewegung versetzt. Die Bewegung kann erkannt werden und führt wiederum zu einem automatischen Verstellen des gesamten Fahrzeugsitzes in die Easy-Entry-Stellung.

Als Triggerkriterium zum Starten des Verstellmodus an einer oder an mehreren Antriebsvorrichtungen des Fahrzeugsitzes im Rahmen einer Easy-Entry-Funktion, insbesondere an einer Antriebsvorrichtung zum Verstellen des Rückenlehnenteils des Fahrzeugsitzes und an einer Antriebsvorrichtung zum Längsverstellen des Fahrzeugsitzes, kann beispielsweise berücksichtigt werden, ob das Fahrzeug sich in einer stehenden Position befindet. Zusätzlich oder alternativ kann berücksichtigt werden, ob der zu verstellende Fahrzeugsitz unbelegt ist. Wiederum zusätzlich oder alternativ kann berücksichtigt werden, ob eine Fahrzeugtür geöffnet ist. Liegt ein Triggerkriterium oder eine vorbestimmte Kombination von Triggerkriterien vor, kann an einer oder an mehreren Antriebsvorrichtungen des Fahrzeugsitzes im Rahmen der Easy-Entry-Funktion der Verstellmodus gestartet werden, sodass eine oder mehrere Baugruppen des Fahrzeugsitzes im Rahmen des Verstellmodus der jeweiligen Antriebsvorrichtung manuell durch den Nutzer bewegbar sind und eine Bewegung erkannt werden kann, um nach Erkennung der Bewegung im Rahmen der Easy-Entry-Funktion den Fahrzeugsitz automatisch und elektromotorisch in eine definierte Endstellung zu bringen, die der Easy-Entry-Stellung entspricht.

Auch Ausschlusskriterien für den Verstellmodus können in diesem Zusammenhang definiert sein. Ist beispielsweise der Fahrzeugsitz, der im Rahmen der Easy-Entry-Funktion verstellt werden soll, belegt, so kann der Verstellmodus verhindert sein und somit auch bei Vorliegen eines oder mehrerer Triggerkriterien nicht gestartet werden.

In einer anderen Applikation kann ein Verstellmodus, zum Beispiel zum Längsverstellen, an mehreren, vorzugsweise sämtlichen Fahrzeugsitzen eines Fahrzeugs gestartet werden. Ein jeder Fahrzeugsitz weist eine Antriebsvorrichtung zum Beispiel zum Längsverstellen auf, die den Verstellmodus der beschriebenen Art ausführen kann. Wird beispielsweise erkannt, dass das Fahrzeug steht und zudem sämtliche Fahrzeugtüren geöffnet sind, so kann zum Beispiel darauf geschlossen werden, dass der Fahrzeuginnenraum gereinigt werden soll. Als Triggerkriterium kann somit berücksichtigt werden, dass das Fahrzeug steht und sämtliche Fahrzeugtüren geöffnet sind, um sodann an den Antriebsvorrichtungen der Fahrzeugsitze jeweils den Verstellmodus zu starten und somit eine manuelle Verstellung der Fahrzeugsitze zu ermöglichen, sodass die Stellungen der Fahrzeugsitze im Fahrzeuginnenraum in leichtgängiger Weise manuell durch einen Nutzer angepasst werden können.

Durch das Starten des Verstellmodus an einem Fahrzeugsitz kann beispielsweise auch eine Installation einer Baugruppe an einer hinter dem Fahrzeugsitz gelegenen Sitzreihe erleichtert werden. Wird als Triggerkriterium zum Beispiel erkannt, dass das Fahrzeug steht und eine Fahrzeugtür geöffnet ist, so kann an der der Längsverstellung des Fahrzeugsitzes zugeordneten Antriebsvorrichtung der Verstellmodus gestartet werden, sodass der Fahrzeugsitz manuell verschoben werden kann und somit ein Raum hinter dem Fahrzeugsitz vergrößert oder in sonstiger Weise angepasst werden kann, um eine Baugruppe, zum Beispiel einen Kindersitz, auf der hinter dem Fahrzeugsitz gelegenen Sitzreihe zu installieren.

In einer anderen Applikation kann ein Verstellen einer Rücksitzreihe, zum Beispiel einzelner Fahrzeugsitze einer Rücksitzreihe, ermöglicht werden, indem an einer oder mehreren, der Rücksitzreihe insgesamt oder einzelnen Fahrzeugsitzen der Rücksitzreihe zugeordneten Antriebsvorrichtungen der Verstellmodus gestartet wird, wenn als Triggerkriterium zum Beispiel erkannt wird, dass das Fahrzeug steht und die Heckklappe geöffnet ist. Zusätzlich oder alternativ kann beispielsweise über ein Innenraumüberwachungssystem erkannt werden, dass ein Nutzer versucht, das Fahrzeug über die Laderaumöffnung bei geöffneter Heckklappe zu beladen. In diesem Fall kann durch Starten des Verstellmodus an einer oder an mehreren Antriebsvorrichtungen eine Verstellung der Rücksitzreihe insgesamt oder einzelner Fahrzeugsitze der Rücksitzreihe ermöglicht werden. Dadurch kann ein Nutzer zum Beispiel von hinten auf ein Rückenlehnenteil der Rücksitzreihe drücken und somit das Rückenlehnenteil im Rahmen des Verstellmodus manuell verschwenken, zum Beispiel durch Druck über einen Ladegegenstand, zum Beispiel eine Dachlatte oder dergleichen. Zusätzlich oder alternativ kann ein Verschieben der Rücksitzreihe insgesamt oder eines Fahrzeugsitzes der Rücksitzreihe im Rahmen des Verstellmodus ermöglicht werden.

Ob im Rahmen des Verstellmodus die Rücksitzreihe insgesamt oder ein Fahrzeugsitz der Rücksitzreihe verschoben wird oder ein Rückenlehnenteil verschwenkt wird, kann beispielsweise davon abhängig gemacht werden, an welcher Stelle der Rücksitzreihe oder eines Fahrzeugsitzes der Rücksitzreihe eine Kraftwirkung erfolgt. Wirkt eine manuelle Kraft (vorrangig) als Drehmoment zum Verschwenken eines Rückenlehnenteils, so kann im Rahmen des Verstellmodus durch die Antriebsvorrichtung zum Verschwenken des Rückenlehnenteils das Rückenlehnenteil manuell verschwenkt werden. Wirkt die Kraftwirkung (vorrangig) linear in Richtung eines Verschiebens des Fahrzeugsitzes, so kann im Rahmen des Verstellmodus durch die Antriebsvorrichtung zum Verschieben des Fahrzeugsitzes der Sitz manuell verschoben werden.

Der Verstellmodus kann beispielsweise jeweils für eine begrenzte Zeit bei Vorliegen eines Triggerkriteriums oder einer Kombination von mehreren Triggerkriterien gestartet werden. Wird innerhalb dieser begrenzten Zeit keine Verstellung an der Innenraumbaugruppe erkannt, so wird der Verstellmodus wieder gestoppt.

Die Steuereinrichtung zum Steuern des Verstellmodus kann beispielsweise durch ein Sitzsteuergerät oder ein Zentralsteuergerät im Fahrzeug verwirklicht sein. Eine solche Steuereinrichtung kann zum Beispiel über ein Bussystem, zum Beispiel einen LIN-Bus oder einen CAN-Bus, mit einer lokalen Steuereinheit einer jeweiligen Antriebsvorrichtung kommunizieren.

Steuerungsaufgaben können zum Beispiel auch verteilt übernommen werden. Beispielsweise kann das Vorliegen von Triggerkriterien durch ein übergeordnetes Steuergerät geprüft und der Verstellmodus entsprechend gestartet werden. Ein Einmessen des Unterstützungsstroms kann demgegenüber beispielsweise durch eine lokale Steuereinheit einer Antriebsvorrichtung durchgeführt werden.

Der Unterstützungsstrom kann einmalig vor Inbetriebnahme oder wiederholt im Betrieb eingemessen werden.

Beispielsweise kann der Unterstützungsstrom bei jedem Start des Verstellmodus eingemessen und individuell eingestellt werden, sodass Alterungserscheinungen oder Änderungen der Umgebungsbedingungen, zum Beispiel eine aktuelle Lage des Fahrzeugs, bei der Bestimmung des Unterstützungsstroms berücksichtigt werden können.

Möglich ist hierbei auch, den Unterstützungsstrom anhand einer automatischen elektromotorischen Verstellung der Innenraumbaugruppe einzustellen, beispielsweise auf einen vorbestimmten prozentualen Anteil eines gemessenen Stroms während einer elektromotorischen Verstellung.

Wird der Verstellmodus an einer oder an mehreren Antriebsvorrichtungen im Rahmen einer Easy-Entry-Funktion ausgeführt, so wird der Verstellmodus, wenn sich der Fahrzeugsitz in einer Normalgebrauchsstellung befindet, vorzugsweise nur in Richtung der Easy-Entry-Stellung zur Verfügung gestellt. Befindet sich der Fahrzeugsitz demgegenüber in der Easy-Entry-Stellung, wird der Verstellmodus zum Initiieren der Verstellung vorzugsweise lediglich in Richtung der Normalgebrauchsstellung zur Verfügung gestellt. Befindet sich der Fahrzeugsitz in einer mittleren Position zwischen der Normalgebrauchsstellung und der Easy-Entry-Stellung, kann der Verstellmodus ein Verstellen in beide Richtungen, also in Richtung der Easy-Entry-Stellung oder in Richtung der Normalgebrauchsstellung ermöglichen, wobei hierzu bei Initiierung des Verstellmodus an dem Verstellantrieb zum Beispiel ein Unterstützungsstrom alternierend in die eine und in die andere Bewegungsrichtung zur Verfügung gestellt wird.

Unterstützungsstromwerte zum Ermöglichen eines Verstellens in entgegengesetzte Bewegungsrichtungen können gleich eingestellt werden oder können unabhängig voneinander eingestellt werden. Beispielsweise können die Unterstützungsstromswerte zum Verstellen in unterschiedliche Bewegungsrichtungen jeweils als parametrische Faktoren eingestellt werden. In einer Ausgestaltung werden die Unterstützungsstromswerte unabhängig voneinander eingemessen, wobei das Einmessen einmalig vor Inbetriebnahme oder wiederholt im Betrieb, zum Beispiel vor jedem Richtungswechsel, erfolgen kann.

Nach einem weiteren Aspekt weist ein Verfahren zum Steuern einer Antriebsvorrichtung zum Verstellen einer Innenraumbaugruppe eines Fahrzeugs zumindest auf: Steuern, durch eine Steuereinrichtung, eines elektromotorischen Verstellantriebs der Antriebsvorrichtung zum Erzeugen einer Verstellkraft, wobei eine durch den Verstellantrieb antreibbare, selbsthemmende Verstellkinematik zum Übertragen einer durch den Verstellantrieb erzeugten Verstellkraft auf die Innenraumbaugruppe ausgebildet ist; Aktivieren, durch die Steuereinrichtung, eines Verstellmodus zum Verstellen der Innenraumbaugruppe in Abhängigkeit von zumindest einem Triggerkriterium; und Ansteuern, bei aktiviertem Verstellmodus und durch die Steuereinrichtung, des Verstellantriebs mit einem Unterstützungsstrom, der so bemessen ist, dass die Innenraumbaugruppe durch eine durch einen Nutzer manuell an der Innenraumbaugruppe erzeugte Nutzerkraft unter Überwindung der Selbsthemmung der Verstellkinematik in Bewegung versetzbar ist, wobei der Unterstützungsstrom so bemessen ist, dass eine durch den Unterstützungsstrom bewirkte Verstellkraft die Innenraumbaugruppe nicht bewegt oder mit einer Bewegungsgeschwindigkeit unterhalb einer Grenzgeschwindigkeit bewegt.

Die vorangehend für die Antriebsvorrichtung beschriebenen Vorteile und vorteilhaften Ausgestaltungen finden analog auch auf das Verfahren Anwendung.

Nach einem weiteren Aspekt umfasst ein Computerprogrammprodukt Befehle, die bei der Ausführung des Programms durch einen Computer diesen veranlassen, das vorangehend angegebene Verfahren auszuführen.

Der der Erfindung zugrunde liegende Gedanke soll nachfolgend anhand der in den Figuren dargestellten Ausführungsbeispiele näher erläutert werden. Es zeigen:

Fig. 1        eine schematische Ansicht eines Fahrzeugs mit Innenraumbaugruppen in Form von Fahrzeugsitzen;
Fig. 2        eine schematische Draufsicht auf ein Fahrzeug;
Fig. 3A       eine Ansicht zur Illustration eines Steigungswinkels eines Fahrzeugs;
Fig. 3B       eine Ansicht zur Illustration eines Neigungswinkels eines Fahrzeugs;
Fig. 4        eine funktionale Ansicht einer Steuereinrichtung einer Antriebsvorrichtung;
Fig. 5        eine grafische Ansicht einer von einem Nutzer aufzubringenden Verstellkraft über einen Verstellweg einer Innenraumbaugruppe in einem Servobetriebsmodus;
Fig. 6        eine schematische Ansicht einer Antriebsvorrichtung zum Verstellen einer Innenraumbaugruppe, zum Beispiel eines Fahrzeugsitzes; und
Fig. 7A, 7B   Ansichten zur Illustration des Einmessens des Unterstützungsstroms bei Start eines Verstellmodus zum Verstellen einer Innenraumbaugruppe.

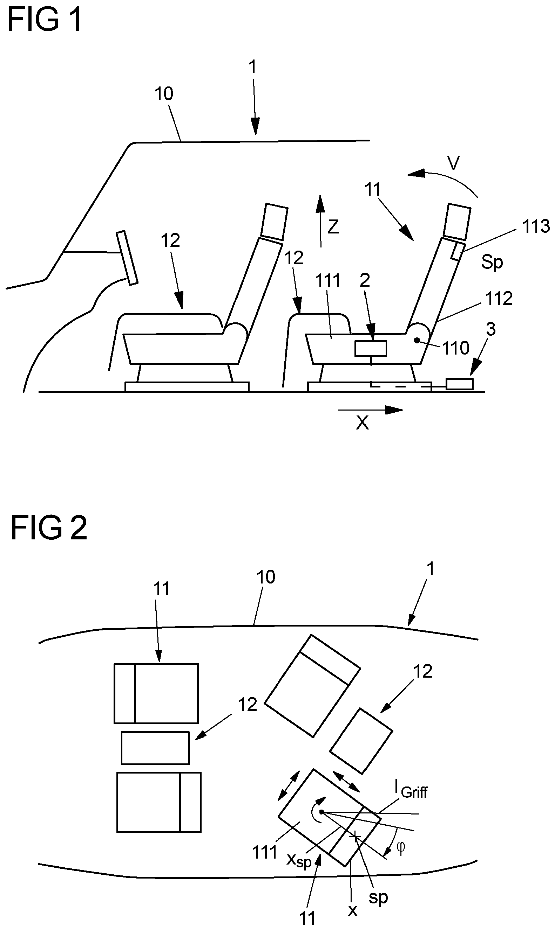

Fig. 1 zeigt in einer schematischen Ansicht ein Fahrzeug 1, das einen durch eine Fahrzeugkarosserie 10 eingefassten Innenraum ausbildet, in dem unterschiedliche Innenraumbaugruppen zum Beispiel in Form von Fahrzeugsitzen 11 und Konsolenelementen 12 und zudem gegebenenfalls weitere Innenraumbaugruppen wie zum Beispiel Monitore, Trennwände, Ablagen, Staufächer oder dergleichen angeordnet sind.

Im Rahmen von neuen Innenraumkonzepten, zum Beispiel im Zusammenhang mit autonom fahrenden Fahrzeugen, können Innenraumbaugruppen 11, 12 in variabler Weise im Innenraum eines Fahrzeugs 1 verstellbar sein.

EP 4 387 867 B1

Zum Beispiel kann eine Innenraumbaugruppe 11 in Form eines Fahrzeugsitzes in variabler Weise verstellbar sein, um den Fahrzeugsitz entlang einer durch eine Fahrzeuglängsrichtung X und eine Fahrzeugquerrichtung Y definierten Verstellebene zu verstellen und zudem gegebenenfalls um eine Vertikalrichtung Z zu verdrehen, wie dies aus Fig. 1 in Zusammenschau mit Fig. 2 ersichtlich ist. Zudem können Baugruppen des Fahrzeugsitzes, zum Beispiel die Rückenlehne 112, verstellbar sein, um die Stellung der jeweiligen Baugruppe anzupassen. Beispielsweise kann die Rückenlehne 112 in ihrer Neigung verstellbar sein. Zudem kann das Sitzteil 111 in seiner Höhenposition und auch in seiner Neigungsstellung einstellbar sein.

Bei einer Innenraumbaugruppe 11, 12 besteht grundsätzlich der Wunsch nach einem komfortablen, intuitiven, haptisch angenehmen Verstellen durch einen Nutzer. Das Verstellen soll hierbei nach Möglichkeit präzise und schnell erfolgen können, wobei der dafür erforderliche Kraftaufwand durch einen Nutzer begrenzt sein soll.

Zum Verstellen einer Innenraumbaugruppe 11, 12 ist, wie dies schematisch in Fig. 1 dargestellt ist, eine Antriebsvorrichtung 2 vorgesehen, die mit einer Steuereinrichtung 3 in Verbindung steht. Die Antriebsvorrichtung 2 ist elektromotorisch ausgestaltet und kann betrieben werden, um eine zugeordnete Innenraumbaugruppe 11, 12 elektromotorisch zwischen unterschiedlichen Positionen zu bewegen.

Grundsätzlich kann einer jeden zu verstellenden Innenraumbaugruppe 11, 12 oder einer zu verstellenden Unterbaugruppe einer Innenraumbaugruppe 11, 12, beispielsweise der Rückenlehne 112 eines Fahrzeugsitzes, eine eigene elektromotorische Antriebsvorrichtung 2 zugeordnet sein, wobei die Antriebsvorrichtungen 2 beispielsweise mit einer gemeinsamen Steuereinrichtung 3 verbunden sein können, sodass die Steuereinrichtung 3 die Antriebsvorrichtungen 2 zum Verstellen der zugeordneten Innenraumbaugruppe und 11, 12 gemeinsam steuert.

Unter Verwendung der Antriebsvorrichtung 2 kann eine zugeordnete Innenraumbaugruppe 11, 12 entlang einer definierten Bewegungsbahn zu verstellen sein. Beispielsweise kann ein Fahrzeugsitz entlang der Fahrzeuglängsrichtung X entlang einer durch Führungsschienen definierten Bewegungsbahn relativ zu einem Fahrzeugboden längs zu verschieben sein. Ein Rückenlehnenteil 112 kann zudem um eine definierte Schwenkachse 110 relativ zum Sitzteil 111 zu verschwenken sein.

Denkbar ist jedoch auch, dass eine Innenraumbaugruppe 11, 12 frei entlang eines Fahrzeugbodens des Fahrzeugs 1 zu bewegen ist und somit frei im Innenraum verstellt und zum Beispiel an definierten Ankerpunkten im Innenraum arretiert werden kann. Insofern sind nicht zwingend zum Beispiel Führungsschienen zum Definieren einer festen, vorgegebenen Bewegungsbahn vorzusehen.

Eine (jede) Antriebsvorrichtung 2 kann beispielsweise in einem Automatikbetrieb und einem Servobetrieb betrieben werden und kann somit ein automatisches Verstellen der jeweils zugeordneten Innenraumbaugruppe 11, 12 oder ein manuelles, aber elektromotorisch durch die Antriebsvorrichtung 2 unterstütztes Verstellen der Innenraumbaugruppe 11, 12 durch einen Nutzer bewirken. Die Antriebsvorrichtung 2 kann hierzu beispielsweise zwischen unterschiedlichen Betriebsmodi schaltbar sein, wobei der Verstellantrieb 20 in Abhängigkeit vom jeweils eingestellten Betriebsmodus in unterschiedlicher Weise gesteuert wird.

Während im Automatikbetrieb eine Regelung beispielsweise auf eine vorbestimmte Drehzahl erfolgen soll, um die Innenraumbaugruppe 11, 12 mit einer vorbestimmten Verstellgeschwindigkeit zwischen unterschiedlichen Positionen zu bewegen, soll im Servobetrieb durch den Verstellantrieb 20 eine Kraft bereitgestellt werden, die bewirkt, dass eine von einem Nutzer zusätzlich aufzubringende Nutzerkraft ein Verstellen der Innenraumbaugruppe 11, 12 bewirkt. Die vom Nutzer aufzubringende Nutzerkraft soll hierbei über den Verstellweg der Innenraumbaugruppe 11, 12 vorzugsweise zumindest näherungsweise gleich sein oder einer gewünschten Kurve folgen, um dem Nutzer ein komfortables, haptisch angenehmes Verstellen zu ermöglichen.

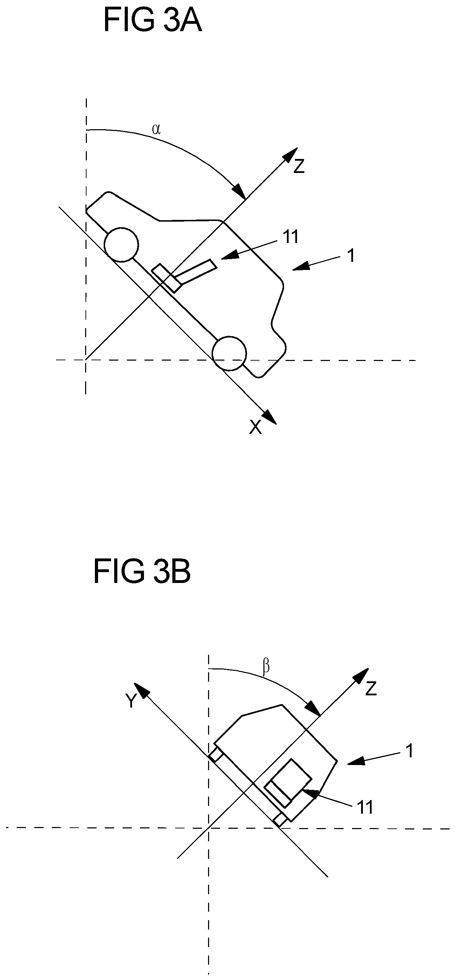

Fig. 3A und 3B zeigen (in zur Illustration übertriebenen Darstellungen) unterschiedliche Fahrzeuglagen und sich daraus ergebende Stellungen einer Innenraumbaugruppe 11 in Form eines Fahrzeugsitzes im Inneren des Fahrzeugs 1.

Fig. 3A zeigt hierbei ein Fahrzeug 1, das zum Beispiel auf einem Hang mit einer Steigung abgestellt ist und dementsprechend einen Steigungswinkel $\alpha$ zwischen der Fahrzeugvertikalachse Z und einer (durch die Schwerkraftrichtung bestimmten) Vertikalen aufweist. Der Steigungswinkel $\alpha$ des Fahrzeugs 1 wird um die Fahrzeugquerachse Y (siehe Fig. 3B) gemessen.

Fig. 3B zeigt demgegenüber ein Fahrzeug 1, das um die Fahrzeuglängsachse X (siehe Fig. 3A) geneigt ist. Die Fahrzeugvertikalachse Z weist in diesem Fall einen um die Fahrzeuglängsachse X gemessenen Neigungswinkel $\beta$ zur Vertikalen auf.

Die Fahrzeuglage geht, wie nachfolgend erläutert werden soll, in die Berechnung der durch den Verstellantrieb 20 im Servobetriebsmodus bereitzustellenden Kraft ein, die einem Nutzer bei einem Verstellen der Innenraumbaugruppe 11, 12 unterstützen soll.

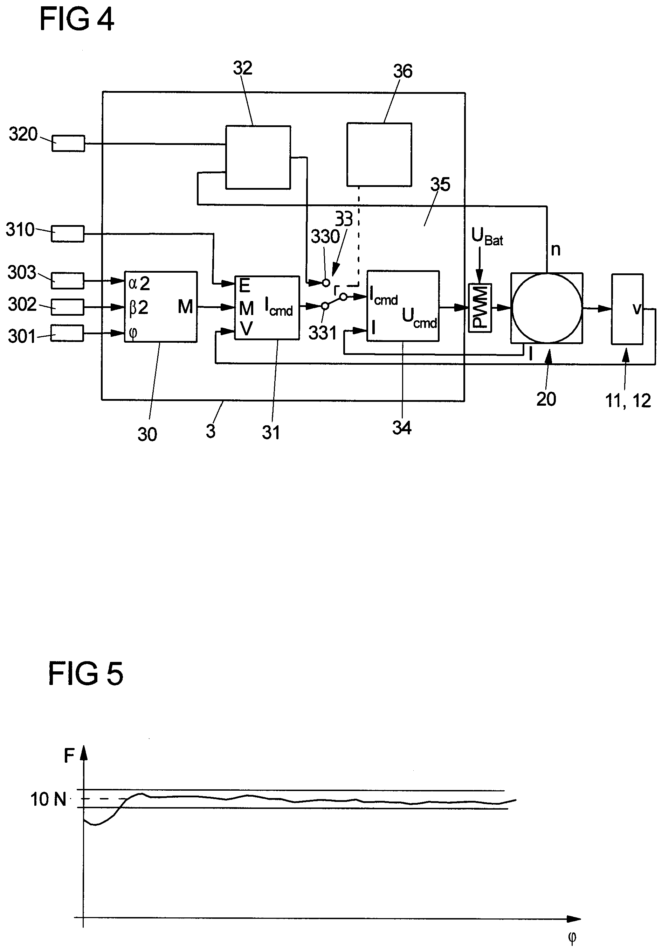

Eine in Fig. 4 in einem Ausführungsbeispiel dargestellte Steuereinrichtung 3 zum Steuern des Verstellantriebs 20 der Antriebsvorrichtung 2 weist unterschiedliche Regelungsmodule auf, die abhängig vom Betriebsmodus dazu dienen, einen (dem Motorstrom entsprechenden) Strom des als Elektromotor ausgebildeten Verstellantriebs 20 so einzustellen, dass ein Verstellen einer Innenraumbaugruppe 11, 12 abhängig vom Betriebsmodus in gewünschter Weise erfolgt, nämlich im Automatikbetrieb mit einer gewünschten Verstellgeschwindigkeit und im Servobetrieb in kraftunterstützter Weise.

Die Steuereinrichtung 3 verwirklicht ein Stromregelungsmodul 34, dem ein Sollwert $I_{cmd}$ zugeführt wird, wobei abhängig vom Betriebsmodus das Stromregelungsmodul 34 den Sollwert $I_{cmd}$ von einem Drehzahlregelungsmodul 32 oder einem Stellmodul 31 erhält.

Das Drehzahlregelungsmodul 32 dient hierbei dazu, in einem Automatikbetrieb den Sollwert $I_{cmd}$ so vorzugeben, dass sich am Verstellantrieb 20 eine gewünschte Drehzahl und entsprechend an der Innenraumbaugruppe 11, 12 eine gewünschte Verstellgeschwindigkeit v ergibt.

Das Stellmodul 31 dient demgegenüber dazu, den Sollwert $I_{cmd}$ so vorzugeben, dass ein manuelles Verstellen der Innenraumbaugruppe 11, 12 im Servobetrieb mit einer Kraft unterstützt wird, die so eingestellt wird, dass die von einem Nutzer zusätzlich aufzubringende Kraft vorzugsweise über den Verstellweg der Innenraumbaugruppe 11, 12 zumindest näherungsweise gleich ist oder einer gewünschten Kurve folgt.

Das Drehzahlregelungsmodul 32 regelt im Automatikbetrieb die Drehzahl des Verstellantriebs 20. Dem Drehzahlregelungsmodul 32 wird hierbei eine Solldrehzahl $n_{cmd}$ über einen Eingang 320 zugeführt, wobei die Solldrehzahl $n_{cmd}$ beispielsweise in einem Speicher gespeichert und somit (als konstanter Wert oder als Drehzahlverlauf über den Verstellweg) fest vorgegeben ist, gegebenenfalls aber auch durch einen Nutzer angepasst werden kann. Abhängig von der Solldrehzahl $n_{cmd}$ und der sich tatsächlich am Verstellantrieb 20 im Regelungsbetrieb ergebenden Drehzahl bestimmt das Drehzahlregelungsmodul 32 einen Sollwert $I_{cmd}$, den es dem Stromregelungsmodul 34 zuführt.

Im Automatikbetrieb ist das Drehzahlregelungsmodul 32 über eine Schalteinrichtung 33 mit dem Stromregelungsmodul 34 verbunden, indem die Schalteinrichtung 33 auf einen Schaltpunkt 330 geschaltet ist. Der vom Drehzahlregelungsmodul 32 ausgegebene Sollwert $I_{cmd}$ wird dem Stromregelungsmodul 34 somit zugeführt, sodass das Stromregelungsmodul 34 eine Stromregelung anhand des vom Drehzahlregelungsmodul 32 erhaltenen Sollwerts $I_{cmd}$ vornehmen kann.

Die Schalteinrichtung 33 kann physisch durch einen mechanischen Schalter verwirklicht sein. Vorteilhaft ist die Schalteinrichtung 33 aber softwaretechnisch durch die Software der Steuereinrichtung 3 umgesetzt. Ebenso sind die Module der Steuereinrichtung 3 vorzugsweise durch Softwaremodule umgesetzt.

Die Steuerung der Schalteinrichtung 33 erfolgt beispielsweise über ein Steuermodul 36 der Steuereinrichtung 3.

Im Stromregelungsmodul 34 erfolgt eine Stromregelung. Das Stromregelungsmodul 34 regelt den Strom des Verstellantriebs 20 derart, dass er auf den dem Stromregelungsmodul 34 zugeführten Sollwert eingestellt wird. Das Stromregelungsmodul 34 stellt den Strom unter Verwendung eines Spannungsstellwerts $U_{cmd}$ in Form eines Lastfaktors (zwischen 0% und 100%) ein, indem der Spannungsstellwert $U_{cmd}$ einer Pulsweitenmodulation 35 zugeführt wird, die anhand der Batteriespannung $U_{Bat}$ des Fahrzeugs und dem Spannungsstellwert $U_{cmd}$ eine Ausgangsspannung erzeugt und dem Verstellantrieb 20 zuführt. Die Pulsweitenmodulation 35 arbeitet vorzugsweise mit vergleichsweise hoher Frequenz, insbesondere mit einer Frequenz zwischen 5 kHz und 30 kHz, beispielsweise 20 kHz, betrieben wird. Anhand des Sollwerts $I_{cmd}$ und des tatsächlich sich ergebenden Stroms I des Stellantriebs 21 wird der Stellwert $U_{cmd}$ so eingestellt, dass der Motorstrom I auf den Sollwert $I_{cmd}$ geregelt wird.

Im Automatikbetrieb erfolgt somit eine Regelung nach Art einer Kaskadenregelung, bei der das Drehzahlregelungsmodul 32 einen Stellwert in Form eines Sollwerts $I_{cmd}$ bestimmt und dem nachgeordneten Stromregelungsmodul 34 zur Stromregelung zuführt.

Durch Schalten der Schalteinrichtung 33 auf den Schaltpunkt 331 kann in einen Servobetrieb umgeschaltet werden, in dem nunmehr dem Stromregelungsmodul 34 ein Sollwert $I_{cmd}$ von dem Stellmodul 31 zugeführt wird. Anhand des von dem Stellmodul 31 erhaltenen Sollwerts erfolgt eine Stromregelung dann derart, dass die durch den Verstellantrieb 20 bereitgestellte Kraft einen Nutzer beim Verstellen der Innenraumbaugruppe 11, 12 unterstützt und der Nutzer eine über den Verstellweg der Innenraumbaugruppe 11, 12 vorzugsweise weitestgehend gleichförmige Nutzerkraft für das elektromotorisch unterstützte Verstellen der Innenraumbaugruppe 11, 12 aufzubringen hat.

Das Bestimmen des Sollwerts $I_{cmd}$ durch das Stellmodul 31 erfolgt in Abhängigkeit von einer an der Innenraumbaugruppe 11, 12 wirkenden Last, die durch ein Lastberechnungsmodul 30 in Abhängigkeit von der Fahrzeuglage und zum Beispiel einer Position der Innenraumbaugruppe 11, 12 berechnet wird.

Dies kann beispielsweise anhand einer Verstellung in Form einer Drehbewegung um die Fahrzeugvertikalachse Z einer Innenraumbaugruppe 11, 12 in Form eines Fahrzeugsitzes erläutert werden. Bei einer solchen Drehbewegung ergeben sich durch die Fahrzeugneigung und die Fahrzeugsteigung beeinflusste Lasten an der Innenraumbaugruppe 11, 12, die bei der Bestimmung des Sollwerts $I_{cmd}$ berücksichtigt werden.

Die an der Innenraumbaugruppe 11, 12 wirkende Last bestimmt sich grundsätzlich aus einer statischen Lastkraft und einer dynamischen Lastkraft.

Für ein Verdrehen um die Fahrzeugvertikalachse Z bestimmt sich ein an der Innenraumbaugruppe 11, 12 wirkendes statisches Lastmoment insbesondere anhand eines sich aufgrund der Schwerkraft um die Fahrzeugvertikalachse Z ergebenden Moments und zusätzlich anhand eines in der Lagerung der Innenraumbaugruppe 11 wirkenden Reibmoments. Das statische Drehmoment, bezeichnet als statisches Lastmoment, ergibt sich so zu

$$M_{stat} = M_{Neigung} * \cos(\alpha) + M_{Steigung} \pm M_R,$$

wobei $M_{stat}$ das statische Lastmoment, $M_{Neigung}$ ein sich aufgrund einer Fahrzeugneigung ergebendes Neigungsmoment, $M_{Steigung}$ ein sich aufgrund einer Fahrzeugsteigung ergebendes Steigungsmoment und $M_R$ ein Reibmoment in der Lagerung der Innenraumbaugruppe 11, 12 bezeichnet.

Anzumerken ist hierzu, dass der Term "cos($\alpha$)" in der obigen Gleichung nur vorliegt, wenn die Neigungs-/Steigungswinkel gemäß DIN ISO 8855 bestimmt sind (entsprechend dem Euler-Winkel, der sich aus einem Roll-Winkel, Pitch-Winkel und Yaw-Winkel ergibt). Wird der Neigungswinkel (absolut) gemessen, so entfällt der Term "cos($\alpha$)".

Das Steigungsmoment und das Neigungsmoment berechnen sich hierbei wie folgt:

- 

$$M_{Steigung} = x_{SP} * m * g * \sin(\alpha) * \sin(\varphi)$$

- 

$$M_{Neigung} = x_{SP} * m * g * \sin(\beta) * \cos(\varphi)$$

Die in diesen Gleichungen verwendeten Größen stellen hierbei dar:

| | |
|---|---|
| $\varphi$ | Aktueller Drehwinkel [°] - Offsetwinkel |
| $x_{SP}$ | Abstand Schwerpunkt - Drehachse [m] |
| $m$ | Masse der Innenraumbaugruppe [kg] |
| $g$ | Erdbeschleunigung [m/s$^2$] |
| $\alpha$ | Steigung Drehachse |
| $\beta$ | Neigung Drehachse [°] |
| $M_R$ | Reibmoment [Nm] |

Die Winkel $\alpha$, $\beta$ sind in Fig. 3A und 3B illustriert. Der Abstand $x_{SP}$ zwischen dem Schwerpunkt SP der Innenraumbaugruppe 11 und der Drehachse der Innenraumbaugruppe 11, 12 ist beispielhaft in Fig. 2 eingezeichnet. Die Steigung des Fahrzeugs 1 und die Neigung des Fahrzeugs 1 sowie die aktuelle Position der Innenraumbaugruppe 11, 12 können sensorisch durch Sensoren 301, 302, 303 erfasst werden, und entsprechend werden Messwerte dem Lastberechnungsmodul 30 zugeführt.

Bei der Bestimmung des statischen Lastmoments kann - zum Beispiel bei Ausgestaltung der Innenraumbaugruppe 11, 12 durch einen Fahrzeugsitz - auch eine Belegung durch einen Nutzer oder durch Objekte mit berücksichtigt werden. In diesem Fall ändert sich insbesondere die Masse der Innenraumbaugruppe 11, 12. Eine aufgrund einer Belegung wirkende Kraft kann beispielsweise anhand eines Sensorsignals einer Sensoreinrichtung der Innenraumbaugruppe 11, 12 zumindest näherungsweise bestimmt und bei der Berechnung des Lastmoments mit einbezogen werden.

Zusätzlich zum statischen Lastmoment wirkt bei Bewegung der Innenraumbaugruppe 11, 12 ein dynamisches Lastmoment, das sich wie folgt berechnet:

$$M_{dyn} = \ddot{\varphi} * I * c$$

$\ddot{\varphi}$ bezeichnet hierbei die Beschleunigung der Innenraumbaugruppe 11, 12. Die Beschleunigung der Innenraumbaugruppe 11, 12 kann aus einer Änderung des Verstellwinkels $\phi$ um die Drehachse ermittelt werden. Alternativ kann die Beschleunigung aber auch aus der Verstellgeschwindigkeit v der Innenraumbaugruppe 11, 12, die dem Stellmodul 31 im Betrieb zugeführt wird, berechnet werden.

I steht in obiger Gleichung für die Trägheit der Innenraumbaugruppe 11. Der Faktor c ermöglicht das Einstellen einer dynamischen Haptik und kann Werte zwischen 0% und 100% annehmen. Wenn c = 100 %, wird eine Dynamikänderung bei Beschleunigung der Innenraumbaugruppe 11 im Wesentlichen motorisch ausgeglichen. Wenn c = 0 %, muss ein Nutzer bei einer Beschleunigung eine Kraftänderung selbst aufbringen.

Zusätzlich zu solchen statischen und dynamischen Lastkräften ergibt sich ein Drehmoment an der Innenraumbaugruppe 11, 12, das durch die Nutzerkraft am Angriffspunkt an der Innenraumbaugruppe 11, 12 bewirkt wird. Das Nutzerdrehmoment ergibt sich hierbei zu

$$M_{user} = F_{user} * l_{Griff}$$

mit

- $F_{user}$      Wunschbedienkraft [N]
- $l_{Griff}$      Abstand Angriffsposition - Schwenkachse [m]
- $M_{user}$      Vom Nutzer erzeugtes Moment [Nm]

Der Abstand $l_{Griff}$ zwischen einer Angriffsposition, an der ein Nutzer bestimmungsgemäß an einer Innenraumbaugruppe 11, 12 angreift und die beispielsweise der Position eines Bedienelements an der Innenraumbaugruppe 11, 12 entsprechen kann, und der entlang der Fahrzeugvertikalrichtung Z weisenden Drehachse der Innenraumbaugruppe 11, 12 ist in Fig. 2 schematisch dargestellt.

Anhand des statischen Lastmoments, des dynamischen Lastmoments und des Nutzerdrehmoments kann eine Kraftbilanz in Form einer Momentenbilanz aufgestellt werden, um ein durch den Verstellantrieb 20 bereitzustellendes Solllastmoment zu bestimmen. Die Momentenbilanz ergibt sich hierbei wie folgt:

$$M_{Soll} = M_{stat} + M_{dyn} - M_{user}$$

$M_{Soll}$ bezeichnet das durch die Antriebsvorrichtung 2 an der Drehachse bereitzustellende Drehmoment. Hieraus berechnet das Stellmodul 31 das durch den Verstellantrieb 20 bereitzustellende Drehmoment unter Einbeziehung eines Übersetzungsverhältnisses der Antriebsvorrichtung 2 zu

$$M_{Soll\_Antrieb} = M_{Soll} * ü_{Hebel}$$

$ü_{Hebel}$ bezeichnet das Übersetzungsverhältnis der Kinematik der Antriebsvorrichtung 2 zur Übersetzung einer durch die Antriebsvorrichtung 2 bereitgestellten Verstellkraft am Ort eines elektromotorischen Verstellantriebs in eine Verstellkraft am Orte der Drehachse der Innenraumbaugruppe 11, 12. $ü_{Hebel}$ kann zum Beispiel abhängig von $\phi$ und zum Beispiel in Form einer Look-Up-Tabelle im System hinterlegt sein.

Aus dem Solldrehmoment des Antriebs berechnet sich das Sollmoment des elektromotorischen Verstellantriebs unter Einbeziehung des Motorwirkungsgrads und eines Übersetzungsverhältnisses eines Motorgetriebes zu

$$M_{Soll\_motor} = \frac{M_{Soll\_Antrieb}}{\eta_{motor} * ü_{Getriebe}}$$

mit

- $\eta_{motor}$      Übersetzungswirkungsgrad [ ]
- $ü_{Getriebe}$      Getriebeübersetzung [ ]

Der Motorstrom ist grundsätzlich proportional zum Motordrehmoment, sodass aus dem Sollmotordrehmoment $M_{Soll\_motor}$ der Sollwert wie folgt berechnet werden kann:

$$I_{Soll\_motor} = \frac{M_{Soll\_motor}}{Kt} + I_o$$

mit

- $Kt$      Motorkonstante [Nm/A]
- $I_o$      Motorleerlaufstrom [A]

Dieser Wert wird als Sollwert $I_{cmd}$ von dem Stellmodul 31 dem Stromregelungsmodul 34 im Servobetriebsmodus zugeführt.

Für eine andere Verstellung, zum Beispiel für eine Längs- und/oder Querverstellung einer Innenraumbaugruppe 11, 12 entlang eines Fahrzeugbodens, also entlang einer durch die Fahrzeuglängsrichtung X und die Fahrzeugquerrichtung Y aufgespannten Verstellebene, ergibt sich ein ähnliches Gleichungssystem, bei dem die Last an der Innenraumbaugruppe 11, 12 von der Neigung und Steigung des Fahrzeugs 1, wie in Fig. 3A und 3B dargestellt, abhängig ist.

Im Servobetriebsmodus wird der Sollwert $I_{cmd}$ somit unter Einbeziehung von auf die Innenraumbaugruppe 11, 12 wirkenden Lastkräften bestimmt derart, dass eine vom Nutzer aufzubringende Kraft über den Verstellweg der Innenraumbaugruppe 11 gleich ist oder einer gewünschten Kurve folgt. Entsprechend ergibt sich zum Beispiel, wie in Fig. 5 dargestellt, über einen Verstellweg der Innenraumbaugruppe 11, 12 (in Fig. 5 aufgezeichnet über einen Verstellwinkel $\phi$) eine zumindest näherungsweise gleichförmige Nutzerkraft F, die auf einen vorbestimmten Wert, beispielsweise auf 10 N, eingestellt sein kann. Ein Nutzer muss somit über den Verstellweg der Innenraumbaugruppe 11, 12 ein geregelte, gleichförmige Nutzerkraft von zum Beispiel 10 N aufbringen, um ein leichtgängiges, elektromotorisch unterstütztes Verstellen der Innenraumbaugruppe 11, 12 zu bewirken.

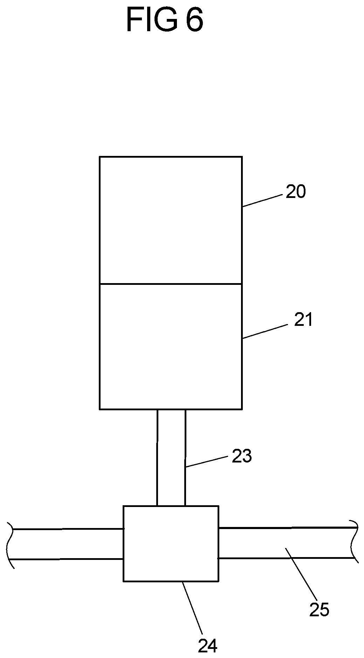

Fig. 6 zeigt schematisch eine Ansicht eines Ausführungsbeispiels einer Antriebsvorrichtung 2, die zum elektromotorischen Verstellen einer zugeordneten Innenraumbaugruppe 11, 12 ausgestaltet ist. Die Antriebsvorrichtung 2 kann in einem Servobetrieb ein manuelles, aber elektromotorisch unterstütztes Verstellen der zugeordneten Innenraumbaugruppe 11, 12 und in einem Automatikbeteib ein automatisches Verstellen zum Beispiel zwischen definierten Verstellpositionen ermöglichen.

Die Antriebsvorrichtung 2 weist einen elektromotorischen Verstellantrieb 20 in Form eines Elektromotors auf, der mit einem Getriebe 21 wirkverbunden ist. Das Getriebe 21 dient zum Antreiben eines Abtriebselements 23, das auf ein Getriebeelement 24 und darüber auf eine Verstellbaugruppe 25 zum Verstellen der zugeordneten Innenraumbaugruppe 11, 12 einwirkt. Das Getriebe 21 verwirklicht gemeinsam mit dem Abtriebselement 23, dem Getriebeelement 24 und der Verstellbaugruppe 25 eine Verstellkinematik zum Übertragen einer Verstellkraft von dem Verstellantrieb 20 auf die zugeordnete Innenraumbaugruppe 11, 12.

Beispielsweise kann das Abtriebselement 23 durch eine Antriebsschnecke mit einer daran geformten Schneckenverzahnung ausgestaltet sein, die mit einem Getriebeelement 24 in Form einer Spindelmutter in Eingriff steht. Die Spindelmutter 24 kann beispielsweise an einer Verstellbaugruppe 25 in Form einer Spindel angeordnet sein, sodass durch Antreiben der Spindelmutter 24 eine Längsverstellung zwischen der Spindelmutter 24 und der Spindel 25 bewirkt und somit eine zugeordnete Innenraumbaugruppe 11, 12 längsverstellt werden kann. Eine solche Verstellkinematik kann beispielsweise bei einer Längsverstelleinrichtung einer Innenraumbaugruppe 11, 12 zum Beispiel in Form eines Fahrzeugsitzes verwirklicht sein.

Der Verstellantrieb 20 mit dem Getriebe 21 und der über das Abtriebselement 23, das Getriebeelement 24 und die Verstellbaugruppe 25 bereitgestellten Verstellkinematik ist selbsthemmend ausgestaltet. Ist der Verstellantrieb 20 somit nicht bestromt, wird die jeweils zugeordnete Innenraumbaugruppe 11, 12 durch die Verstellkinematik in Position gehalten.

Das Verstellen der Innenraumbaugruppe 11, 12 soll in komfortabler Weise durch einen Nutzer vorgenommen werden können, indem ein Nutzer an der zu verstellenden Innenraumbaugruppe 11, 12 angreift und durch manuelle Kraftwirkung eine Verstellbewegung initiiert. Während bei nicht bestromtem Verstellantrieb 20 ein manuelles Verstellen der Innenraumbaugruppe 11, 12 aufgrund der Selbsthemmung der Verstellkinematik ausgeschlossen ist und eine abtriebseitig in die Innenraumbaugruppe 11, 12 eingeleitete Verstellkraft durch die Verstellkinematik gesperrt ist, ist vorliegend vorgesehen, dass durch Bestromen des Verstellantriebs die Selbsthemmung überwunden und somit ein manuelles Verstellen der Innenraumbaugruppe 11, 12 ermöglicht wird.

Insbesondere ist die Steuereinrichtung 3 dazu ausgebildet, einen Verstellmodus zum Verstellen der Innenraumbaugruppe 11, 12 zu aktivieren und bei aktiviertem Verstellmodus den Verstellantrieb 20 mit einem Unterstützungsstrom anzusteuern. Der Unterstützungsstrom ist hierbei so bemessen, dass die Selbsthemmung der Verstellkinematik aufgehoben wird, sodass bei Angreifen eines Nutzers an der Innenraumbaugruppe 11, 12 diese manuell bewegt werden kann.

Um die Anforderungen für eine Sensorik zum Erkennen eines Verstellwunsches zu reduzieren, ist dabei vorgesehen, dass der Verstellmodus zum Verstellen der Innenraumbaugruppe 11, 12 in Abhängigkeit von einem oder mehreren Triggerkriterien aktiviert wird.

Bei solchen Triggerkriterien kann es sich beispielsweise um den Belegungs- oder Bewegungszustand einer Innenraumbaugruppe 11, 12, zum Beispiel eines Fahrzeugsitzes, um einen Öffnungszustand einer Fahrzeugtür, insbesondere einer Fahrzeugseitentür oder einer Heckklappe, oder um einen Fahrzustand des Fahrzeugs handeln.

Solche Triggerkriterien können als positive Kriterien geprüft werden und dazu führen, dass der Verstellmodus aktiviert wird. Solche Triggerkriterien können aber auch als negative Kriterien (Ausschlusskriterien) geprüft werden und bewirken, dass der Verstellmodus nur gestartet werden kann, wenn ein solches negatives Kriterium nicht gegeben ist.

Als positives Kriterium kann zum Beispiel der Öffnungszustand einer Fahrzeugtür abgefragt werden. So kann beispielsweise der Verstellmodus aktiviert werden, wenn eine Fahrzeugseitentür oder die Heckklappe geöffnet wird, wobei in diesem Fall der Verstellmodus zum Beispiel für eine Innenraumbaugruppe 11, 12 im Bereich der geöffneten Fahrzeugseitentür oder der Heckklappe aktiviert wird.

Als negatives Kriterium kann zum Beispiel der Belegungszustand oder ein Fahrzustand des Fahrzeugs abgefragt werden. So kann eine Aktivierung des Verstellmodus beispielsweise nur dann möglich sein, wenn eine Innenraumbaugruppe 11, 12 in Form eines Fahrzeugsitzes nicht belegt ist oder wenn das Fahrzeug nicht fährt, sich also im Stillstand befindet.

Wird der Verstellmodus bei Vorliegen eines Triggerkriteriums oder bei Vorliegen einer vorbestimmten Kombination von Triggerkriterien aktiviert, so wird der Verstellantrieb 20 zunächst mit einem niederenergetischen, vorteilhafterweise pulsweitenmodulierten Unterstützungsstrom bestromt. Der Unterstützungsstrom ist hierbei so bemessen, dass die Selbsthemmung des Getriebes 21 und der damit gekoppelten Kinematik aufgehoben wird, die Innenraumbaugruppe 11, 12 aber nicht in eine Bewegung versetzt wird oder, alternativ, sich langsam anfängt zu bewegen.

Wird sodann eine Bewegung der Innenraumbaugruppe 11, 12 erkannt, beispielsweise anhand einer Bewegungserkennung unter Verwendung von Hallsensoren an der Innenraumbaugruppe 11, 12, so wird auf einen Verstellwunsch eines Nutzers geschlossen und zum Beispiel der Servobetrieb gestartet, in dem ein weiteres Verstellen der Innenraumbaugruppe 11, 12 elektromotorisch durch den Verstellantrieb 20 im Servobetrieb unterstützt wird.

Die Bestromung bei Aktivierung des Verstellmodus kann niederenergetisch derart erfolgen, dass die Innenraumbaugruppe 11, 12 sich zunächst nicht bewegt. Die Bestromung ist somit derart, dass eine Verstellkraft in das Getriebe und darüber in die Innenraumbaugruppe 11, 12 eingeleitet wird, die die Selbsthemmung aufhebt, sodass durch eine abtriebseitig in die Innenraumbaugruppe 11, 12 eingeleitete Nutzerkraft die Innenraumbaugruppe 11, 12 in Bewegung versetzt werden kann. Die Bestromung mit dem niederenergetischen Unterstützungsstrom führt jedoch selbst noch nicht zu einer Bewegung an der Innenraumbaugruppe 11, 12.

Alternativ kann die Bestromung derart erfolgen, dass die Innenraumbaugruppe 11, 12 bei Aktivierung des Verstellmodus in eine langsame Bewegung versetzt wird, wobei die Bewegungsgeschwindigkeit kleiner als eine Grenzgeschwindigkeit ist, die beispielsweise in einem Bereich zwischen 1/10000 m/s und 1/100 m/s liegt. Die Innenraumbaugruppe 11, 12 beginnt bei Bestromung mit dem niederenergetischen Unterstützungsstrom bei Aktivierung des Verstellmodus sich somit langsam zu bewegen, sodass ein Nutzer auf die Aktivierung des Verstellmodus hingewiesen wird.

Erfolgt die Bestromung mit dem Unterstützungsstrom in eine Bewegungsrichtung, so wird die Selbsthemmung auch nur in dieser einen Bewegungsrichtung aufgehoben. Um ein manuelles Verstellen in unterschiedliche Bewegungsrichtungen zu ermöglichen, kann der Verstellantrieb 20 alternierend bestromt werden, wobei der Unterstützungsstrom in beide Bewegungsrichtungen gleich bemessen sein kann oder abhängig von der Bewegungsrichtung unterschiedlich sein kann. Die Bestromung kann in jede Bewegungsrichtung über eine festgelegte Zeitspanne, zum Beispiel zwischen 0,1 Sekunden und 1 Sekunde, erfolgen, wobei die Bestromung in die unterschiedlichen Bewegungsrichtungen alterniert wird.

Der Wert des niederenergetischen Unterstützungsstroms bei Aktivierung des Verstellmodus kann fest programmiert und unveränderlich im System hinterlegt sein. Alternativ kann der Wert des Unterstützungsstroms durch Kalibrierung eingemessen werden, wobei die Kalibrierung einmalig vor Inbetriebnahme an der jeweils zugeordneten Innenraumbaugruppe 11, 12 erfolgen kann oder die Kalibrierung wiederholt im Betrieb erfolgen kann.

Die Kalibrierung kann beispielsweise derart erfolgen, dass eine Bestromung des Verstellantriebs 20 an einer Innenraumbaugruppe 11, 12 langsam gesteigert wird, wobei unter Verwendung von Hallsensoren des Verstellantriebs 20 überwacht wird, ab welchem Stromwert sich der Verstellantrieb 20 zu bewegen beginnt. Der Unterstützungsstrom kann dann auf einen Wert eingestellt werden, der zum Beispiel gerade unterhalb eines Stromwerts ist, bei dem sich der Verstellantrieb 20 zu bewegen beginnt.

Ein Verstellwunsch eines Nutzers kann bei Aktivierung des Verstellmodus durch eine Bewegungserkennung an der Innenraumbaugruppe 11, 12 (zum Beispiel unter Verwendung eines Bewegungssensors an der Innenraumbaugruppe 11, 12) oder durch Bewegungserkennung an dem Verstellantrieb 20 (unter Verwendung von Hallsensoren des Verstellantriebs 20) erfolgen.

Es kann hierbei ein Verstellwunsch erkannt werden, wenn eine Bewegung an der Innenraumbaugruppe 11, 12 detektiert wird. Alternativ kann ein Verstellwunsch bei aktiviertem Verstellmodus anhand eines bestimmten Bewegungsmusters an der Innenraumbaugruppe 11, 12 erkannt werden. Beispielweise kann auf einen Verstellwunsch erkannt werden, wenn eine rüttelnde Bewegung an der Innenraumbaugruppe 11, 12 oder eine Impulskraft im Sinne eines Anstupsens an der Innenraumbaugruppe 11, 12 erkannt wird.

Wird ein Verstellwunsch bei aktiviertem Verstellmodus erkannt, so kann zum Beispiel in den Servobetrieb geschaltet werden, um ein weiteres, manuelles Verstellen der Innenraumbaugruppe 11, 12 elektromotorisch zu unterstützen.

Alternativ kann die Steuereinrichtung 3 dazu ausgestaltet sein, bei erkanntem Verstellwunsch in einen Anstupsbetrieb zu schalten, in dem die Innenraumbaugruppe 11, 12 bei aktiviertem Verstellmodus zunächst durch Aufbringen eines Impulses durch einen Nutzer bewegt und die weitere Bewegung der Innenraumbaugruppe 11, 12 sodann ohne weiteres Nutzerzutun erfolgt, beispielsweise indem der Strom des Verstellantriebs 20 zum weiteren Bewegen der Innenraumbaugruppe 11, 12 bis in eine vordefinierte Endposition geregelt wird.

Hinzuweisen ist darauf, dass im Anstupsbetrieb auch möglich ist, die weitere Bewegung der Innenraumbaugruppe 11, 12 nach dem Aufbringen eines Impulses durch einen Nutzer nicht weiter zu steuern, sondern die Innenraumbaugruppe 11, 12 sich nach dem Anstupsen durch den Nutzer frei bewegen zu lassen, bis die Innenraumbaugruppe 11, 12 aufgrund von Reibung im System selbsttätig anhält. Bei aktiviertem Verstellmodus und bei Bereitstellen des Unterstützungsstroms zur Aufhebung der Selbsthemmung erfolgt das weitere Bewegen somit rein manuell, indem ein Nutzer einen Impuls auf die Innenraumbaugruppe 11, 12 aufbringt und sich die Innenraumbaugruppe 11, 12 sodann selbsttätig ohne weitere Steuerung bewegt.

Die Steuereinrichtung 3 kann bei Aktivierung des Verstellmodus dazu ausgestaltet sein, ein Hinweissignal für einen Nutzer zu erzeugen, sodass der Nutzer alarmiert wird, dass der Verstellmodus für eine bestimmte Innenraumbaugruppe 11, 12 aktiviert worden ist. Ein solcher Hinweis kann dadurch erfolgen, dass bei Aktivierung des Verstellmodus der Verstellantrieb 20 für eine langsame Bewegung der Innenraumbaugruppe 11, 12 angesteuert wird, die von einem Nutzer wahrnehmbar ist. Zusätzlich oder alternativ kann die Steuereinrichtung 3 ein Signal zum Beispiel an ein Audiosystem des Fahrzeugs abgeben, das den Nutzer auf den aktivierten Verstellmodus hinweist. Wiederum zusätzlich oder alternativ kann die Steuereinrichtung 3 den Verstellantrieb 20 zum Beispiel für eine vorbestimmte Geräuschgenerierung, zum Beispiel zum Abspielen von Tönen, ansteuern.

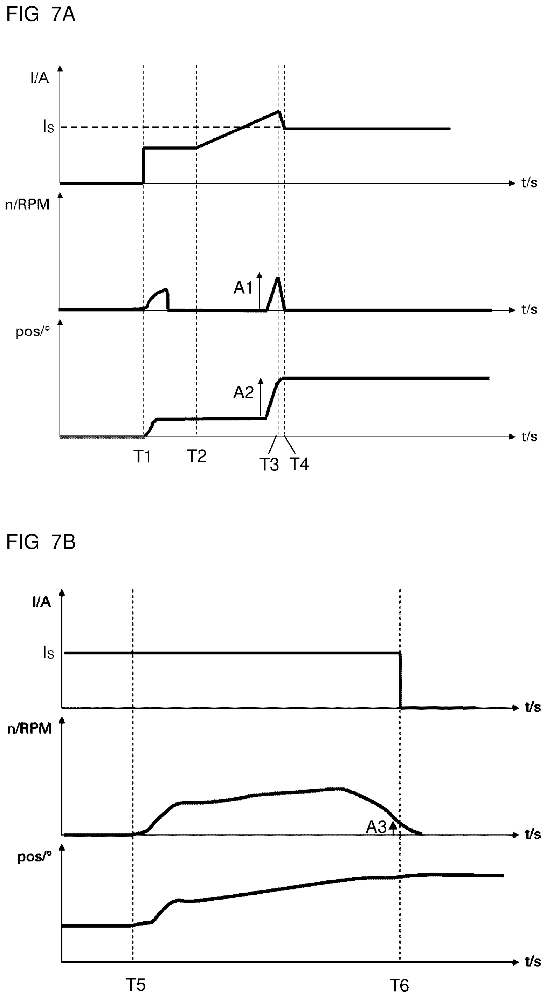

Anhand von Fig. 7A und 7B ist ein mögliches Vorgehen zum Bestimmen eines Unterstützungsstroms zum Starten eines Verstellmodus an einer Antriebsvorrichtung 2 an einer Innenraumbaugruppe 11, zum Beispiel einem Fahrzeugsitz, veranschaulicht. In Fig. 7A, 7B ist hierbei jeweils im oberen Diagramm der an dem Verstellantrieb 20 bereitgestellte Motorstrom I [A], in dem mittleren Diagramm die Drehzahl n [rpm] des Verstellantriebs 20 und in dem unteren Diagramm die Position pos [°] der Motorwelle über der Zeit dargestellt.

In dem dargestellten Ablauf wird zum Zeitpunkt T1 der Verstellmodus der Antriebsvorrichtung 2 in Abhängigkeit des Vorliegens eines Triggerkriteriums oder einer Kombination von mehreren Triggerkriterien gestartet. Zu Beginn des Verstellmodus wird der Unterstützungsstrom individuell bestimmt und somit eingemessen, sodass der Unterstützungsstrom anhand der konkret vorliegenden Gegebenheiten, zum Beispiel einer Schwergängigkeit in der Antriebsvorrichtung 2 und einer Parkposition des Fahrzeugs, eingestellt wird.

Nach dem Erkennen des Vorliegens der erforderlichen Triggerkriterien zum Zeitpunkt T1 wird der Verstellantrieb 20 zunächst in einem Zeitraum zwischen den Zeitpunkten T1, T2 mit einem konstanten Strom bestromt. Der Strom ist so bemessen, dass ein Spiel im System ausgeglichen werden kann, eine Verstellung der zugeordneten Innenraumbaugruppe aber nicht erfolgen kann. Entsprechend ergibt sich, wie in Fig. 7A anhand des Verlaufs der Drehzahl und der Position erkennbar, eine geringfügige Positionsänderung bei Drehung des Motors, der einen Spielausgleich im System bewirkt.

Zum Zeitpunkt T2 ist das Spiel ausgeglichen. Der Motorstrom wird nunmehr langsam gesteigert, bis im Zeitpunkt T3 eine Bewegung der Innenraumbaugruppe erkannt wird. Auf eine Bewegung wird hierbei dann erkannt, wenn die Drehzahl des Verstellantriebs 20 eine vorbestimmte Grenzdrehzahl A1 erreicht (Fig. 7A im mittleren Diagramm) und/oder die Position der Motorwelle sich um einen vorbestimmten Weg A2 geändert hat (Fig. 7A im unteren Diagramm).

Zum Zeitpunkt T3 wird somit erkannt, dass die Innenraumbaugruppe sich aufgrund der Bestromung in Bewegung versetzt hat. Zwischen den Zeitpunkten T3 und T4 wird nunmehr der Motorstrom reduziert, zum Beispiel anhand eines vorbestimmten Faktors, sodass der Verstellantrieb 20 nachfolgend mit einem Motorstrom bestromt wird, der für sich keine Verstellung der Innenraumbaugruppe bewirkt und den Unterstützungsstrom $I_S$ darstellt.

Beispielsweise wird der Unterstützungsstrom $I_S$ auf einen Wert zwischen 50 % und 70 % des Stromwerts zum Zeitpunkt T3, also des Stromwerts, bei der eine Bewegung der Innenraumbaugruppe aufgrund der Bestromung erkannt wird, eingestellt.

Nach dem Zeitpunkt T4 ist die Antriebsvorrichtung 2 bei aktiviertem Verstellmodus betriebsbereit, sodass ein Nutzer die Innenraumbaugruppe manuell verstellen kann. Dies ist in Fig. 7B dargestellt.

Zum Zeitpunkt T5 wird beispielsweise eine Kraft durch einen Nutzer auf die Innenraumbaugruppe ausgeübt, die zu einem Verstellen an der Innenraumbaugruppe führt. Entsprechend ändert sich die Drehzahl (Fig. 7B, mittleres Diagramm) und die Position der Motorwelle (Fig. 7B, unteres Diagramm) des Verstellantriebs 20. Die Verstellung der Innenraumbaugruppe erfolgt manuell, wobei die Selbsthemmung im System durch den Unterstützungsstrom $I_S$ überwunden wird und somit das Verstellen der Innenraumbaugruppe leichtgängig durch einen Nutzer erfolgen kann, zum Beispiel indem der Nutzer die Innenraumbaugruppe zum Aufbringen eines Impulses anstupst oder manuell führt.

Zum Zeitpunkt T6 wird erkannt, dass die Drehzahl unter einen vorbestimmten Schwellwert A3 gefallen ist. Zu diesem Zeitpunkt T6 wird der Verstellmodus beendet und der Unterstützungsstrom $I_S$ somit abgeschaltet, sodass der Verstellantrieb 20 nicht länger bestromt wird. Die Antriebsvorrichtung 2 gelangt damit in ihren selbsthemmenden Zustand, in dem die Selbsthemmung nicht länger durch den Verstellantrieb 20 überwunden ist und das System somit insgesamt selbsthemmend wirkt, sodass eine weitere Verstellung durch abtriebseitig eingeleitete Kräfte nicht möglich ist.

Der Verstellmodus ist somit beendet, die Innenraumbaugruppe gelangt in einen Stillstand und behält ihre Position nach dem Zeitpunkt T6 bei.

Ein Bestimmen des Unterstützungsstroms $I_S$, wie vorangehend beschrieben, kann bei jedem Start des Verstellmodus erfolgen. Das Bestimmen des Unterstützungsstroms kann hierbei auch bei einem Richtungswechsel vorgenommen werden, sodass der Unterstützungsstrom stets individuell neu bestimmt wird und somit Veränderungen im System berücksichtigt werden.

Denkbar ist aber auch, den Unterstützungsstrom lediglich einmalig, zum Beispiel bei Inbetriebnahme, oder mit größeren Abständen, zum Beispiel einmal am Tag, einmal in der Woche oder einmal im Monat, einzumessen.

Der der Erfindung zugrunde liegende Gedanke ist nicht auf die vorangehend geschilderten Ausführungsbeispiele beschränkt, sondern lässt sich auch in anderer Weise verwirklichen.

Die Innenraumbaugruppe kann durch ganz unterschiedliche Baugruppen im Innenraum eines Fahrzeugs verwirklicht sein und ist insofern nicht auf einen Fahrzeugsitz oder ein Konsolenelement beschränkt. Bei einer Innenraumbaugruppe, die über eine Antriebsvorrichtung in einem Servobetrieb verstellt werden kann, kann es sich beispielsweise auch um einen Monitor, eine Ablage (zum Beispiel in Form eines Tisches oder dergleichen), eine Trennwand, ein Staufach oder dergleichen handeln.

Eine Steuerung im Servobetrieb ist nicht auf eine Stromregelung der beschriebenen Art beschränkt, sondern kann auch anders ausgestaltet sein.

**Bezugszeichenliste**

| | |
|---|---|
| 1 | Kraftfahrzeug |
| 10 | Fahrzeugkarosserie |
| 11 | Innenraumbaugruppe (Fahrzeugsitz) |
| 110 | Schwenkachse |
| 111 | Sitzteil |
| 112 | Rückenlehnenteil |
| 12 | Innenraumbaugruppe (Konsolenelement) |
| 2 | Antriebsvorrichtung |
| 20 | Verstellantrieb (Motor) |
| 21 | Getriebe |
| 23 | Abtriebselement |
| 24 | Getriebeelement |
| 25 | Verstellbaugruppe |
| 3 | Steuereinrichtung |
| 30 | Lastberechnungsmodul |
| 301-303 | Sensoreinrichtung |
| 31 | Stellmodul |
| 310 | Ereigniserkennung |
| 32 | Drehzahlregelungsmodul |
| 320 | Drehzahleingabe |
| 33 | Schalteinrichtung |
| 330, 331 | Schaltpunkt |
| 34 | Stromregelungsmodul |
| 35 | PWM-Einheit |
| 36 | Steuermodul |
| $\alpha$ | Steigungswinkel der Fahrzeugvertikalachse |
| $\beta$ | Neigungswinkel der Fahrzeugvertikalachse |
| $\phi$ | Winkel |
| A1-A3 | Schwellwert |
| $I_{cmd}$ | Sollwert |
| $I_S$ | Unterstützungsstrom |
| n | Drehzahl |
| SP | Schwerpunkt |
| T1-T6 | Zeitpunkt |
| $U_{Bat}$ | Batteriespannung |
| $x_{SP}$ | Abstand Drehachse-Schwerpunkt |
| V | Schwenkrichtung |
| X | Fahrzeuglängsachse |
| Y | Fahrzeugquerachse |
| Z | Fahrzeugvertikalachse |

**Patentansprüche**

1. Antriebsvorrichtung (2) zum Verstellen einer Innenraumbaugruppe (11, 12) eines Fahrzeugs (1), mit

   einem elektromotorischen Verstellantrieb (20) zum Erzeugen einer Verstellkraft,
   einer durch den Verstellantrieb (20) antreibbaren, selbsthemmenden Verstellkinematik (21-25) zum Übertragen einer durch den Verstellantrieb (20) erzeugten Verstellkraft auf die Innenraumbaugruppe (11, 12) und
   einer Steuereinrichtung (3) zum Steuern des Verstellantriebs (20),
   wobei die Steuereinrichtung (3) ausgebildet ist, einen Verstellmodus zum Verstellen der Innenraumbaugruppe (11, 12) in Abhängigkeit von zumindest einem Triggerkriterium zu aktivieren und bei aktiviertem Verstellmodus den Verstellantrieb (20) mit einem Unterstützungsstrom anzusteuern, der so bemessen ist, dass die Innenraumbaugruppe (11, 12) durch eine durch einen Nutzer manuell an der Innenraumbaugruppe (11, 12) erzeugte Nutzerkraft unter Überwindung der Selbsthemmung der Verstellkinematik (21-25) in Bewegung versetzbar ist, **dadurch gekennzeichnet, dass** der Unterstützungsstrom so bemessen ist, dass eine durch den Unterstützungsstrom bewirkte Verstellkraft die Innenraumbaugruppe (11, 12) nicht bewegt oder mit einer Bewegungsgeschwindigkeit unterhalb einer Grenzgeschwindigkeit bewegt.

2. Antriebsvorrichtung (2) nach Anspruch 1, **dadurch gekennzeichnet, dass** der Unterstützungsstrom pulsweitenmoduliert ist.

3. Antriebsvorrichtung (2) nach Anspruch 1 oder 2, **dadurch gekennzeichnet, dass** die Steuereinrichtung (3) ausgebildet ist, in dem Verstellmodus den Unterstützungsstrom anhand eines fest vorgegebenen Werts einzustellen.

4. Antriebsvorrichtung (2) nach einem der vorangehenden Ansprüche, **dadurch gekennzeichnet, dass** die Steuereinrichtung (3) ausgebildet ist, in einer Kalibrationsroutine außerhalb des Verstellmodus einen Wert für den Unterstützungsstrom einzumessen und in dem Verstellmodus den Unterstützungsstrom anhand des eingemessenen Werts einzustellen.

5. Antriebsvorrichtung (2) nach einem der vorangehenden Ansprüche, **dadurch gekennzeichnet, dass** die Steuereinrichtung (3) ausgebildet ist, bei aktiviertem Verstellmodus den Verstellantrieb (20) wechselseitig in unterschiedliche Verstellrichtungen zu bestromen.

6. Antriebsvorrichtung (2) nach einem der vorangehenden Ansprüche, **dadurch gekennzeichnet, dass** die Steuereinrichtung (3) ausgebildet ist, bei aktiviertem Verstellmodus eine Nutzerinteraktion an der Innenraumbaugruppe (11, 12) anhand einer Bewegung der Innenraumbaugruppe (11, 12) zu erkennen.

7. Antriebsvorrichtung (2) nach einem der vorangehenden Ansprüche, **dadurch gekennzeichnet, dass** die Steuereinrichtung (3) ausgebildet ist, den Verstellantrieb (20) in einem Servobetrieb zum Bereitstellen einer unterstützenden Kraft bei einer manuellen Verstellung der Innenraumbaugruppe (11, 12) durch einen Nutzer anzusteuern, wobei die Steuereinrichtung (3) ausgebildet ist, bei aktiviertem Verstellmodus eine Nutzerinteraktion an der Innenraumbaugruppe (11, 12) zu erkennen und den Servobetrieb anhand der erkannten Nutzerinteraktion zu starten.

8. Antriebsvorrichtung (2) nach einem der vorangehenden Ansprüche, **dadurch gekennzeichnet, dass** die Steuereinrichtung (3) ausgebildet ist, den Verstellantrieb (20) in einem Anstupsbetrieb zum Bewegen der Innenraumbaugruppe (11, 12) nach einem von einem Nutzer bewirkten Impuls an der Innenraumbaugruppe (11, 12) anzusteuern, wobei die Steuereinrichtung (3) ausgebildet ist, bei aktiviertem Verstellmodus eine Nutzerinteraktion an der Innenraumbaugruppe (11, 12) zu erkennen und den Anstupsbetrieb anhand der erkannten Nutzerinteraktion zu starten.

9. Antriebsvorrichtung (2) nach einem der vorangehenden Ansprüche, **dadurch gekennzeichnet, dass** die Steuereinrichtung (3) ausgebildet ist, als Triggerkriterium einen Belegungszustand der Innenraumbaugruppe (11, 12), einen Öffnungszustand einer Fahrzeugtür oder einen Fahrzustand des Fahrzeugs (1) auszuwerten.

10. Antriebsvorrichtung (2) nach einem der vorangehenden Ansprüche, **dadurch gekennzeichnet, dass** die Steuereinrichung (3) ausgebildet ist, nach dem Aktivieren des Verstellmodus ein Hinweissignal als Hinweis auf den Verstellmodus zum Ausgeben an einen Nutzer zu erzeugen.

11. Antriebsvorrichtung (2) nach einem der vorangehenden Ansprüche, **dadurch gekennzeichnet, dass** die Steuereinrichtung (3) ein Stromregelungsmodul (34) zum Regeln eines Stroms des Verstellantriebs (20) aufweist.

**12.** Antriebsvorrichtung (2) nach Anspruch 11, **dadurch gekennzeichnet, dass** die Steuereinrichtung (3) ein Stellmodul (31) zum Bestimmen eines Sollwerts in Abhängigkeit von einer an der Innenraumbaugruppe (11, 12) wirkenden Last aufweist, wobei das Stromregelungsmodul (34) ausgebildet ist, den Strom des Verstellantriebs (20) anhand des von dem Stellmodul (31) zugeführten Sollwerts zu regeln.

**13.** Antriebsvorrichtung (2) nach Anspruch 12, **dadurch gekennzeichnet, dass** die Steuereinrichtung (3) ein Lastberechnungsmodul (30) aufweist, das ausgebildet ist, eine an der Innenraumbaugruppe (11, 12) wirkende Last in Abhängigkeit von einem um eine Fahrzeuglängsachse (X) gemessenen Neigungswinkel ($\beta$2) des Fahrzeugs (1), einem um die Fahrzeuglängsachse (X) gemessenen Neigungswinkel ($\beta$1) einer Schwenkachse (110) der Innenraumbaugruppe (11, 12), einem um eine Fahrzeugquerachse (Y) gemessenen Steigungswinkel ($\alpha$2) des Fahrzeugs (1), einem um die Fahrzeugquerachse (Y) gemessenen Steigungswinkel ($\alpha$1) der Schwenkachse (110) der Innenraumbaugruppe (11, 12) und/oder einer Stellung ($\phi$) der Innenraumbaugruppe (11, 12) zu bestimmen.

**14.** Verfahren zum Steuern einer Antriebsvorrichtung (2) zum Verstellen einer Innenraumbaugruppe (11, 12) eines Fahrzeugs (1), aufweisend:

Steuern, durch eine Steuereinrichtung (3), eines elektromotorischen Verstellantriebs (20) der Antriebsvorrichtung (2) zum Erzeugen einer Verstellkraft, wobei eine durch den Verstellantrieb (20) antreibbare, selbsthemmende Verstellkinematik (21-25) zum Übertragen einer durch den Verstellantrieb (20) erzeugten Verstellkraft auf die Innenraumbaugruppe (11, 12) ausgebildet ist;
Aktivieren, durch die Steuereinrichtung (3), eines Verstellmodus zum Verstellen der Innenraumbaugruppe (11, 12) in Abhängigkeit von zumindest einem Triggerkriterium; und
Ansteuern, bei aktiviertem Verstellmodus und durch die Steuereinrichtung (3), des Verstellantriebs (20) mit einem Unterstützungsstrom, der so bemessen ist, dass die Innenraumbaugruppe (11, 12) durch eine durch einen Nutzer manuell an der Innenraumbaugruppe (11, 12) erzeugte Nutzerkraft unter Überwindung der Selbsthemmung der Verstellkinematik (21-25) in Bewegung versetzbar ist,
**dadurch gekennzeichnet, dass** der Unterstützungsstrom so bemessen ist, dass eine durch den Unterstützungsstrom bewirkte Verstellkraft die Innenraumbaugruppe (11, 12) nicht bewegt oder mit einer Bewegungsgeschwindigkeit unterhalb einer Grenzgeschwindigkeit bewegt.

**15.** Computerprogrammprodukt, umfassend Befehle, die bei der Ausführung des Programms durch einen Computer diesen veranlassen, das Verfahren nach Anspruch 14 auszuführen.

**Claims**

**1.** A drive device (2) for adjusting an interior assembly (11, 12) of a vehicle (1), comprising

a electromotive adjusting drive (20) for generating an adjusting force,
a self-locking kinematic adjusting mechanism (21-25) to be driven by the adjusting drive (20) for transmitting an adjusting force generated by the adjusting drive (20) to the interior assembly (11, 12), and
a control device (3) for controlling the adjusting drive (20),
wherein the control device (3) is configured to activate an adjusting mode for adjusting the interior assembly (11, 12) in dependence on at least one trigger criterion and, with an activated adjusting mode, to actuate the adjusting drive (20) with a support current which is dimensioned such that the interior assembly (11, 12) can be put into movement by a user force manually generated by a user on the interior assembly (11, 12) by overcoming the self-locking of the kinematic adjusting mechanism (21-25),
**characterized in that** the support current is dimensioned such that an adjusting force caused by the support current does not move the interior assembly (11, 12) or moves the same with a speed of movement below a limit speed.

**2.** The drive device (2) according to claim 1, **characterized in that** the support current is pulse-width-modulated.

**3.** The drive device (2) according to claim 1 or 2, **characterized in that** in the adjusting mode the control device (3) is configured to set the support current with reference to a firmly specified value.

**4.** The drive device (2) according to any of the preceding claims, **characterized in that** in a calibration routine outside the adjusting mode the control device (3) is configured to calibrate a value for the support current and in the adjusting mode to set the support current with reference to the calibrated value.

5. The drive device (2) according to any of the preceding claims, **characterized in that** with an activated adjusting mode the control device (3) is configured to alternately energize the adjusting drive (20) in different adjustment directions.

6. The drive device (2) according to any of the preceding claims, **characterized in that** with an activated adjusting mode the control device (3) is configured to detect a user interaction on the interior assembly (11, 12) with reference to a movement of the interior assembly (11, 12).

7. The drive device (2) according to any of the preceding claims, **characterized in that** the control device (3) is configured to actuate the adjusting drive (20) in a servo mode for providing a supporting force in the case of a manual adjustment of the interior assembly (11, 12) by a user, wherein with an activated adjusting mode the control device (3) is configured to detect a user interaction on the interior assembly (11) and to start the servo mode with reference to the detected user interaction.

8. The drive device (2) according to any of the preceding claims, **characterized in that** the control device (3) is configured to actuate the adjusting drive (20) in a nudging mode for moving the interior assembly (11, 12) after an impulse effected by a user on the interior assembly (11, 12), wherein with an activated adjusting mode the control device (3) is configured to detect a user interaction on the interior assembly (11, 12) and to start the nudging mode with reference to the detected user interaction.

9. The drive device (2) according to any of the preceding claims, **characterized in that** the control device (3) is configured to evaluate an occupancy state of the interior assembly (11, 12), an opening state of a vehicle door or a driving state of the vehicle (1) as a trigger criterion.

10. The drive device (2) according to any of the preceding claims, **characterized in that** after activation of the adjusting mode the control device (3) is configured to generate an indication signal as an indication of the adjusting mode for output to a user.

11. The drive device (2) according to any of the preceding claims, **characterized in that** the control device (3) includes a current regulation module (34) for regulating a current of the adjusting drive (20).

12. The drive device (2) according to claim 11, **characterized in that** the control device (3) includes a servo module (31) for determining a setpoint in dependence on a load acting on the interior assembly (11, 12), wherein the current regulation module (34) is configured to regulate the current of the adjusting drive (20) with reference to the setpoint supplied by the servo module (31).

13. The drive device (2) according to claim 12, **characterized in that** the control device (3) includes a load calculation module (30) which is configured to determine a load acting on the interior assembly (11, 12) in dependence on an inclination angle ($\beta2$) of the vehicle (1), which is measured about a longitudinal vehicle axis (X), an inclination angle ($\beta1$) of a pivot axis (110) of the interior assembly (11, 12), which is measured about the longitudinal vehicle axis (X), a slope angle ($\alpha2$) of the vehicle (1), which is measured about the transverse vehicle axis (Y), a slope angle ($\alpha1$) of the pivot axis (110) of the interior assembly (11, 12), which is measured about the transverse vehicle axis (Y), and/or a position ($\phi$) of the interior assembly (11, 12).

14. A method for controlling a drive device (2) for adjusting an interior assembly (11, 12) of a vehicle (1), including:

controlling, by a control device (3), an electromotive adjusting drive (20) of the drive device (2) for generating an adjusting force, wherein a self-locking kinematic adjusting mechanism (21-25) to be driven by the adjusting drive (20) is configured to transmit an adjusting force generated by the adjusting drive (20) to the interior assembly (11, 12);
activating, by the control device (3), an adjusting mode for adjusting the interior assembly (11, 12) in dependence on at least one trigger criterion; and
actuating, with an activated adjusting mode and by the control device (3), the adjusting drive (20) with a support current which is dimensioned such that the interior assembly (11, 12) can be put into movement by a user force manually generated by a user on the interior assembly (11, 12) by overcoming the self-locking of the kinematic adjusting mechanism (21-25),
**characterized in that** the support current is dimensioned such that an adjusting force effected by the support current does not move the interior assembly (11, 12) or moves the same with a speed of movement below a limit speed.

15. A computer program product, comprising commands which on execution of the program by a computer cause the same to carry out the method according to claim 14.

**Revendications**

1. Dispositif d'entraînement (2) pour ajuster un ensemble intérieur (11, 12) d'un véhicule (1), comprenant

   un entraînement de réglage (20) à moteur électrique pour générer une force de réglage,
   une cinématique de réglage (21-25) autobloquante, pouvant être entraînée par l'entraînement de réglage (20), pour transmettre une force de réglage générée par l'entraînement de réglage (20) à l'ensemble intérieur (11, 12) et
   un dispositif de commande (3) pour commander l'entraînement de réglage (20),
   le dispositif de commande (3) étant conçu pour activer un mode de réglage pour ajuster l'ensemble intérieur (11, 12) en dépendance d'au moins un critère de déclenchement et, lorsque le mode de réglage est activé, pour commander l'entraînement de réglage (20) avec un courant d'assistance qui est dimensionné de telle sorte que l'ensemble d'intérieur (11, 12) peut être mis en mouvement par une force d'utilisateur générée manuellement par un utilisateur sur l'ensemble intérieur (11, 12) en surmontant l'autoblocage de la cinématique de réglage (21-25), **caractérisé en ce que** le courant d'assistance est dimensionné de telle sorte qu'une force de réglage effectuée par le courant d'assistance ne déplace pas l'ensemble intérieur (11, 12) ou le déplace à une vitesse de déplacement inférieure à une vitesse limite.

2. Dispositif d'entraînement (2) selon la revendication 1, **caractérisé en ce que** le courant d'assistance est modulé en largeur d'impulsion.

3. Dispositif d'entraînement (2) selon la revendication 1 ou 2, **caractérisé en ce que** le dispositif de commande (3) est conçu pour régler le courant d'assistance à l'aide d'une valeur prédéfinie fixe dans le mode de réglage.

4. Dispositif d'entraînement (2) selon l'une quelconque des revendications précédentes, **caractérisé en ce que** le dispositif de commande (3) est conçu pour étalonner une valeur pour le courant d'assistance dans une routine d'étalonnage en dehors du mode de réglage et pour régler le courant d'assistance dans le mode de réglage à l'aide de la valeur étalonnée.

5. Dispositif d'entraînement (2) selon l'une quelconque des revendications précédentes, **caractérisé en ce que** le dispositif de commande (3) est conçu pour alimenter alternativement l'entraînement de réglage (20) dans différentes directions de réglage lorsque le mode de réglage est activé.

6. Dispositif d'entraînement (2) selon l'une quelconque des revendications précédentes, **caractérisé en ce que** le dispositif de commande (3) est conçu pour détecter, lorsque le mode de réglage est activé, une interaction de l'utilisateur avec l'ensemble intérieur (11, 12) à l'aide d'un mouvement de l'ensemble intérieur (11, 12).

7. Dispositif d'entraînement (2) selon l'une quelconque des revendications précédentes, **caractérisé en ce que** le dispositif de commande (3) est conçu pour actionner l'entraînement de réglage (20) dans un mode servo pour fournir une force d'assistance lors d'un réglage manuel de l'ensemble intérieur (11, 12) par un utilisateur, le dispositif de commande (3) étant conçu pour détecter une interaction de l'utilisateur sur l'ensemble intérieur (11, 12) lorsque le mode de réglage est activé et pour démarrer le mode servo à l'aide de l'interaction de l'utilisateur détectée.

8. Dispositif d'entraînement (2) selon l'une quelconque des revendications précédentes, **caractérisé en ce que** le dispositif de commande (3) est conçu pour actionner l'entraînement de réglage (20) dans un mode de poussée pour déplacer l'ensemble intérieur (11, 12) après une impulsion effectuée par un utilisateur sur l'ensemble intérieur (11, 12), le dispositif de commande (3) étant conçu, lorsque le mode de réglage est activé, pour détecter une interaction de l'utilisateur sur l'ensemble intérieur (11, 12) et pour démarrer le mode de poussée à l'aide de l'interaction de l'utilisateur détectée.

9. Dispositif d'entraînement (2) selon l'une quelconque des revendications précédentes, **caractérisé en ce que** le dispositif de commande (3) est conçu pour évaluer comme critère de déclenchement un état d'occupation de l'ensemble intérieur (11, 12), un état d'ouverture d'une porte de véhicule ou un état de marche du véhicule (1).

10. Dispositif d'entraînement (2) selon l'une quelconque des revendications précédentes, **caractérisé en ce que** le dispositif de commande (3) est conçu pour générer, après l'activation du mode de réglage, un signal d'indication comme indication du mode de réglage à délivrer à un utilisateur.

11. Dispositif d'entraînement (2) selon l'une quelconque des revendications précédentes, **caractérisé en ce que** le dispositif de commande (3) comprend un module de régulation de courant (34) pour réguler un courant de l'entraînement de réglage (20).

12. Dispositif d'entraînement (2) selon la revendication 11, **caractérisé en ce que** le dispositif de commande (3) comprend un module de réglage (31) pour déterminer une valeur de consigne en dépendance d'une charge agissant sur l'ensemble intérieur (11, 12), le module de régulation de courant (34) étant conçu pour réguler le courant de l'entraînement de réglage (20) à l'aide de la valeur de consigne fournie par le module de réglage (31).

13. Dispositif d'entraînement (2) selon la revendication 12, **caractérisé en ce que** le dispositif de commande (3) comprend un module de calcul de charge (30) qui est conçu pour calculer une charge agissant sur l'ensemble intérieur (11, 12) en dépendance d'un angle d'inclinaison ($\beta2$) du véhicule (1) mesuré autour d'un axe longitudinal (X) du véhicule, d'un angle d'inclinaison ($\beta1$) d'un axe de pivotement (110) de l'ensemble intérieur (11, 12), mesuré autour de l'axe longitudinal (X) du véhicule, d'un angle de pente ($\alpha2$) du véhicule (1), mesuré autour d'un axe transversal (Y) du véhicule, d'un angle de pente ($\alpha1$) de l'axe de pivotement (110) de l'ensemble intérieur (11, 12), mesuré autour de l'axe transversal (Y) du véhicule, et/ou d'une position ($\phi$) de l'ensemble intérieur (11, 12).

14. Procédé de commande d'un dispositif d'entraînement (2) pour ajuster un ensemble intérieur (11, 12) d'un véhicule (1), comprenant :

commander, par un dispositif de commande (3), un entraînement de réglage (20) à moteur électrique du dispositif d'entraînement (2) pour générer une force de réglage, une cinématique de réglage (21-25) autobloquante, pouvant être entraînée par l'entraînement de réglage (20), pour transmettre une force de réglage générée par l'entraînement de réglage (20) à l'ensemble intérieur (11, 12) ;
l'activation, par le dispositif de commande (3), d'un mode de réglage pour ajuster l'ensemble intérieur (11, 12) en dépendance d'au moins un critère de déclenchement ; et
l'actionnement, lorsque le mode de réglage est activé et par le dispositif de commande (3), de l'entraînement de réglage (20) avec un courant d'assistance qui est dimensionné de telle sorte que l'ensemble intérieur (11, 12) peut être mis en mouvement par une force utilisateur générée manuellement par un utilisateur sur l'ensemble intérieur (11, 12) en surmontant l'autoblocage de la cinématique de réglage (21-25),
**caractérisé en ce que** le courant d'assistance est dimensionné de telle sorte qu'une force de réglage effectuée par le courant d'assistance ne déplace pas l'ensemble intérieur (11, 12) ou le déplace à une vitesse de déplacement inférieure à une vitesse limite.

15. Produit de programme d'ordinateur, comprenant des instructions qui, lorsque le programme est exécuté par un ordinateur, amènent ce dernier à exécuter le procédé selon la revendication 14.

## FIG 1

## FIG 2

# FIG 3A

# FIG 3B

## FIG 4

## FIG 5

# FIG 6

FIG 7A

FIG 7B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170166089 A1
- WO 2021023760 A1